# EUROPEAN PATENT APPLICATION

(11) **EP 2 541 407 A1**
(43) Date of publication of application: **02.01.2013**
(21) Application number: 10846491.8
(22) Date of filing: 23.02.2010
(51) Int. Cl.: G06F 9/50

(54) **MULTI-CORE PROCESSOR SYSTEM, CONTROL PROGRAM, AND CONTROL METHOD**

(71) Applicant: Fujitsu Limited, Kawasaki-shi, Kanagawa 211-8588 (JP)
(72) Inventor: YAMASHITA, Koichiro, Kawasaki-shi Kanagawa 211-8588 (JP); YAMAUCHI, Hiromasa, Kawasaki-shi Kanagawa 211-8588 (JP); MIYAZAKI, Kiyoshi, Kawasaki-shi Kanagawa 211-8588 (JP)
(74) Representative: Lewin, David Nicholas
(86) International application number: PCT/JP2010/052793
(87) International publication number: WO 2011/104824

(57) **Abstract**

In a multi-core processor system, applications A, C, and D are under execution, and all applications under execution are high-reliability applications. CPU 0 is allocated the high-reliability master threads of application C and application D; CPU 1 is allocated the high-reliability master thread of application A. CPU 0, which is the master CPU, by a scheduler (100), receives an allocation instruction for a low-reliability thread of application B, which is a low-reliability application, and identifies a CPU that is not allocated a high-reliability master thread. Here, CPU 2 and CPU 3 are identified and CPU 0 gives to CPU 2 identified by the scheduler (100), notification of an invocation instruction for the low-reliability thread by the scheduler (100). Thus, control is performed such that a high-reliability master thread and a low-reliability thread are not allocated to the same CPU.

## Description

### TECHNICAL FIELD

The embodiments discussed herein are related to a multi-core processor system, a control program, and a control method that perform master/slave schedule processing and hypervisor processing in a multi-core processor.

### BACKGROUND ART

Conventionally, among multi-core processor systems, schemes called decentralized systems (hereinafter, "first conventional scheme") and centralized systems (hereinafter, "second conventional scheme") are commonly known.

The first conventional scheme is a scheme where physically separate memory is connected to each central processing unit (CPU). Consequently, in the first conventional scheme, independent applications do not compete for access since the mutually independent memory is decentralized and connected. Therefore, deterioration of CPU performance consequent to access competition does not occur. Accordingly, even if one application crashes consequent to a malfunction, the CPU on which the application that crashed is running is the only CPU affected by the crash.

Here, a crash refers to not only abnormal termination of software that has malfunctioned during a state when normal operation cannot be performed consequent to a writing of data to an invalid area, jumping to an invalid address, etc. by the software having a defect (bug), but also refers to a state when another process included in the OS cannot be continued consequent to damage of OS memory area, an invalid jump, etc.

The second conventional scheme is a scheme where 1 physical memory is used and all CPUs are connected to the memory through a bus. The second conventional scheme has less memory compared to the first conventional scheme and thus, is low cost and has low power consumption. As a result, the second conventional scheme is adopted in integrated systems. Conventionally, in the scheduling performed by a master CPU, for example, applications or threads invoked by applications are allocated to CPUs in ascending order of CPU load.

Further, large-scale computers, etc. include a checkpoint/restart method, etc. and a mechanism that in the event of a crash, saves the operation state of an application and recovers operation from a check point when a problem occurs (first conventional technology).

Further, techniques of accessing hardware through virtual machines, by software that is included in the OS are known for large-scale computers, etc. (second conventional technology, for example, see Patent documents 1 to 3). In general, a virtual machine is used because a virtual machine realizes segregation and smooth migration (migration according to virtual machine) by virtualizing a CPU and software tied to one another. If one software crashes consequent to a malfunction, the virtual machine operating the software that crashed, goes down.

Patent Document 1: Published Japanese-Translation of PCT Application, Publication No. 2006/134691
Patent Document 2: Japanese Laid-Open Patent Publication Neo. 2002-202959
Patent Document 3: Japanese Laid-Open Patent Publication No. 2008-152594

### DISCLOSURE OF INVENTION

### PROBLEM TO BE SOLVED BY THE INVENTION

Nonetheless, conventionally, an application that has a low potential of crashing and is highly reliable, and an application that has a high potential of crashing and is not highly reliable are simultaneously executed. Consequently, a problem arises in that the high-reliability application may crash consequent to a crash of the unreliable application caused by an error occurring at the unreliable application.

Although crashing of the high-reliability application can be prevented by use of the first and the second conventional technologies, in the first and the second conventional technologies, huge expansion of memory resources is necessary and in integrated systems having few memory resources, application of the first and the second conventional technologies is difficult.

To solve the problems above, an object of the present invention is to provide a multi-core processor system, a control program, and a control method capable of preventing an application having a low potential of crashing from being affected by a crash of an application having a high potential of crashing.

### MEANS FOR SOLVING PROBLEM

To solve the problems above and achieve an object, a multi-core processor system includes a multi-core processor and a storage apparatus storing for each application software (hereinafter, "applications"), a reliability level related to operation, where a given core in the multi-core processor has access to the storage apparatus; extracts from the storage apparatus, the reliability level for a given application that is among the applications and invokes a given thread; judges based on the extracted reliability level and a specified threshold, whether the given application is an application of high reliability; identifies, in the multi-core processor, a core that has not been allocated a thread of an application of low reliability, when the given application is judged to be an application of high reliability, and identifies in the multi-core processor, a core that has not been allocated a thread of an application of high reliability, when the given application is judged to be an application of low reliability; and gives to the identified core, an invocation instruction for the given thread.

### EFFECT OF THE INVENTION

The multi-core processor system, the control program, and the control method prevent an application having a low potential of crashing from being affected by a crash of an application having a high potential of crashing.

### BRIEF DESCRIPTION OF DRAWINGS

FIG. 1 is a diagram depicting an implementation example of control processing according to a first embodiment;
FIG. 2 is a diagram depicting an example of a reliability level list;
FIG. 3 is a diagram depicting an example of task configuration information;
FIG. 4 is a block diagram of a hardware configuration of a multi-core processor system;
FIG. 5 is a block diagram of a functional configuration of the multi-core processor system according to the first embodiment;
FIG. 6 is a diagram depicting an example where a high-reliability thread is allocated;
FIG. 7 is a diagram depicting an example of task configuration information after allocation of high-reliability threads;
FIG. 8 is a diagram depicting an example of low-reliability thread allocation;
FIG. 9 is a diagram depicting an example where none of CPUs 0 to 3 have been allocated a low-reliability thread;
FIG. 10 is a diagram depicting an example where a master CPU is not allocated a low-reliability thread;
FIG. 11 is a flowchart depicting an example of control processing by the multi-core processor system according to the first embodiment;
FIG. 12 is a flowchart depicting details of allocation processing for a high-reliability master thread (step S1107) depicted in FIG. 11;
FIG. 13 is a flowchart depicting details of the allocation processing for a low-reliability thread (step S1109) depicted in FIG. 11;
FIG. 14 is a flowchart depicting an example of registration processing by the multi-core processor system;
FIG. 15 is a diagram depicting an implementation example of the control processing according to a second embodiment;
FIG. 16 is a block diagram depicting a functional configuration of the multi-core processor system according to the second embodiment;
FIG. 17 is a diagram depicting an example where a thread has crashed;
FIG. 18 is a diagram depicting an example where each CPU sends an in-operation indicator signal to CPU 0;
FIG. 19 is a diagram depicting an example where an application is suspended;
FIG. 20 is a diagram depicting an example of a reboot instruction and a thread allocation instruction;
FIG. 21 is a diagram depicting an example where a reliability level in the reliability level list is changed;
FIG. 22 is a diagram depicting an example where a thread that has crashed is allocated to a CPU, exclusive of a stalled CPU;
FIG. 23 is a diagram depicting an example of the task configuration information after re-invocation;
FIG. 24 is a diagram depicting an example where a thread invocation instruction is sent to a stalled CPU;
FIG. 25 is a flowchart depicting an example of control processing by the multi-core processor system according to the second embodiment;
FIG. 26 is a flowchart depicting details of re-invocation processing (step S2503) depicted in FIG. 25;
FIG. 27 is a flowchart depicting details of the re-invocation processing (step S2504) depicted in FIG. 25; and
FIG. 28 is a flowchart depicting an example of processing for sending an in-operation indicator signal by the multi-core processor.

### BEST MODE(S) FOR CARRYING OUT THE INVENTION

Preferred embodiments of a multi-core processor system, a control program, and a control method will be explained with reference to the accompanying drawings.

In a first embodiment, allocation to each CPU will be described. Next, in a second embodiment, restarting of a thread that has crashed consequent to stalling of the CPU will be described.

Here, as commonly known, a thread is an execution unit of a process performed in an application. A process is an execution unit that includes at least 1 thread. A process that includes only 1 thread is essentially a thread. Therefore, in the first embodiment, whether threads are being allocated or processes are being allocated, control processing by a scheduler 100 does not differ and therefore, description will be given using threads.

In the first embodiment, a first process invoked by notification of an application start instruction from a user is generically called a master thread. Further in the first embodiment, a process newly invoked by the master thread is called a slave thread and moreover in the first embodiment, a process newly invoked by the slave thread also similarly called a slave thread.

At the master thread, since parent/child relationships of the slave thread and results obtained by completed processing for the thread are managed, if the master thread crashes, the application is restarted.

With reference to the attached figures, the first embodiment and the second embodiment will be described in detail.

### (First embodiment)

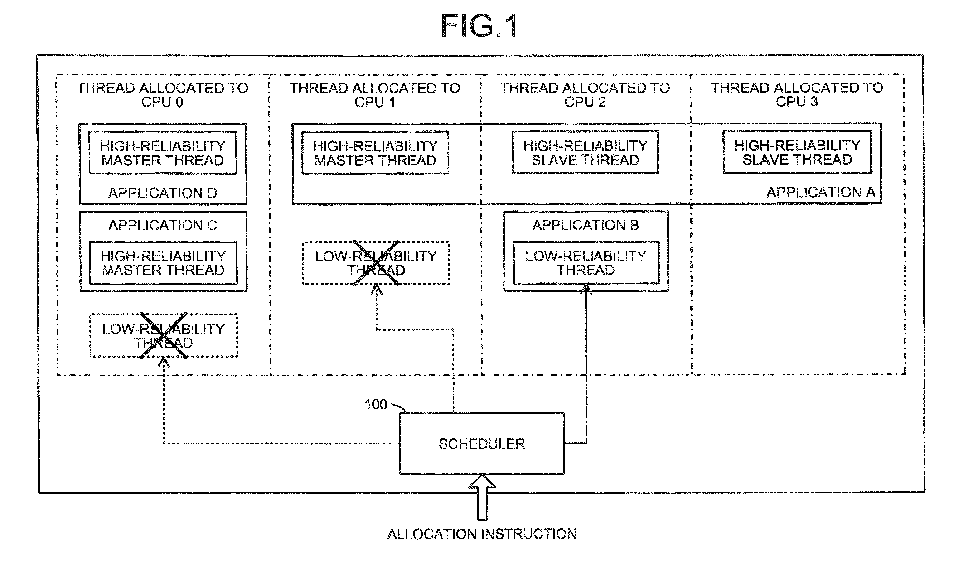

FIG. 1 is a diagram depicting an implementation example of control processing according to the first embodiment. In FIG. 1, applications A, C, and D are all under execution and an allocation instruction for the threads of application B is assumed to be received by the scheduler 100. Applications A, C, and D are assumed to be applications of high reliability and application B is assumed to be an application not of high reliability.

Here, applications of high reliability and applications not of high reliability will be described in detail. As described above, an application of high reliability is an application that has a low potential of crashing. For example, an application of high reliability is an application installed at the time of shipment, an application distributed by the purveyor, etc.

On the other hand, as described, an application not of high reliability is an application that has a high potential of crashing. For example, an application not of high reliability is an application arbitrarily installed by the user after operation.

In the first embodiment, an application of high reliability is referred to as a high-reliability application and a thread of a high-reliability application is referred to as a high-reliability thread. Among the high-reliability threads, a master thread is referred to as a high-reliability master thread and among the high-reliability threads, a slave thread is referred to as a high-reliability slave thread.

In the first embodiment, an application not of high reliability is referred to as a low-reliability application and a thread of a low-reliability application is referred to as a low-reliability thread. Among the low-reliability threads, a master thread is referred to as a low-reliability master thread and among the low-reliability threads, a slave thread is referred to as a low-reliability slave thread.

In FIG. 1, the high-reliability master thread of application D and the high-reliability master thread of application E are allocated to CPU 0; the high-reliability master thread of application A is allocated to CPU 1. A high-reliability slave thread of application A is allocated to CPU 2. A high-reliability slave thread invoked by application A is allocated to CPU 3.

Here, the scheduler 100 is included in an operating system. CPU 0 (master CPU), by the scheduler 100, receives an allocation instruction for a thread and executes allocation processing for the thread.

CPU 0 receives by the scheduler 100, an allocation instruction for a thread of application B; extracts from memory, a reliability level related to application B; and judges whether application B is a high-reliability application. In this example, application B is judged to be a low-reliability application.

For example, CPU 0 identifies among CPUs 0 to 3, a CPU that has not been allocated a high-reliability master thread by the scheduler 100. Here, since a high-reliability master thread has been allocated to CPU 0 and CPU 1, the master thread of the low-reliability application B cannot be allocated (dotted lined arrows in FIG. 1).

Here, CPU 2 and CPU 3 are identified as CPUs that have not been allocated a high-reliability master thread and for example, a thread (low-reliability thread in FIG. 1) of application B is allocated to CPU 2 (solid lined arrow in FIG. 1).

For example, if CPU 2 stalls consequent to a crash of the low-reliability thread, a high-reliability slave thread allocated to CPU 2 also simultaneously crashes. However, despite being a high-reliability thread, the thread is a slave thread and therefore, re-execution of the crashed high-reliability slave thread alone suffices and other threads are not affected by the crash.

Further, in FIG. 1, although the CPUs are separated based on whether allocation is of a high-reliability master thread or a low-reliability thread, the CPUs may be separated based on whether allocation is of a high-reliability thread or a low-reliability thread. Consequently, high-reliability threads are not affected by low-reliability thread crashes.

### (Reliability level list)

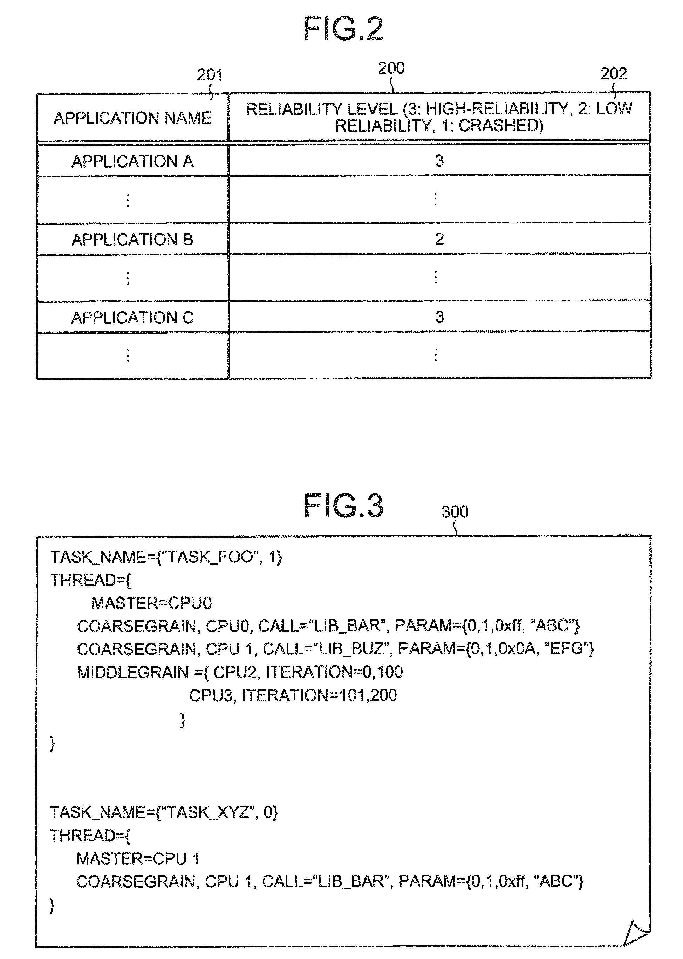

FIG. 2 is a diagram depicting an example of a reliability level list. A reliability level list 200 is information stored in memory accessible by each CPU of the multi-core processor and includes fields for an application name 201 and a reliability level 202. Here, the value of the reliability level 202 indicates the reliability level and for the sake of easy understanding, the reliability level 202 is assumed to have 3 levels: high reliability, low reliability, and crashed. Concerning the reliability level, conventionally used priority level numbers may be used. For example, if the value of the reliability level 202 is 3, the application is indicated to be a high-reliability application; if the value of the reliability level 202 is 2, the application is indicated to be a low-reliability application; and if the value of the reliability level 202 is 1, the application is indicated to have crashed.

A design engineer at the time of operational design of the multi-core processor system, for example, registers into the reliability level list 200, reliability levels related to preliminarily integrated applications.

### (Task configuration information)

FIG. 3 is a diagram depicting an example of task configuration information. Task configuration information 300 is information stored in memory accessible by each CPU of the multi-core processor; and in the task configuration information, information related to an application under execution is described. Application related information is allocation information that indicates to which CPU each thread of an application is allocated and a reliability level flag that indicates whether the application is a high-reliability application.

In the task configuration information 300, a task name and a reliability level flag is indicated by an assignment statement "TASK_NAME". Here, as commonly known, a task represents the entire work performed by 1 application. In the task configuration information 300, TASK_FOO and TASK_XYZ are described, where TASK_FOO is information related to application A and TASK_XYZ is information related to application B.

Further, in the task configuration information 300, allocation information of a master thread is indicated by an assignment statement "WASTER". In TASK_FOO, allocation of a master thread to CPU 0 is described. Further, in TASK_FOO of the task configuration information 300, below the assignment statement "MASER", slave thread allocation information is described. A calling of "LIB_BAR" and allocation to CPU 0 by slave thread 1; and a calling of "LIB_BUZ" and allocation to CPU 1 by slave thread 2 is described. Here, "LIB_BAR" and "LIB_BUZ" are names of functions.

Further, in TASK_FOO of the task configuration information 300, slave thread 3 is a thread that among 0 to 200 loops of the same processing, performs the 0 to 100 loops of the processing, and allocation of slave thread 3 to CPU 2 is described.

In TASK_FOO of the task configuration information 300, allocation of a thread to CPU 2 is described, the thread performing the 101 to 200 loops of the processing, among the 0 to 200 loops of processing.

Here, COARSEGRAIN and MIDDLEGRAIN described in the task configuration information 300 will be described. In the first embodiment, a thread that calls a function and executes the called function is referred to a coarse grain thread, and a thread that executes looped processing is referred to as a middle grain thread. A thread represented by COARSEGRAIN is a coarse grain thread, and a thread represented by MIDDLEGRAIN is a middle grain thread.

In TASK_XYZ, allocation of a master thread to CPU 1 and allocation of a slave thread to CPU 1 is described.
The task configuration information 300 indicates that the slave thread calls and executes "LIB_BAR".

### (Hardware configuration of multi-core processor system)

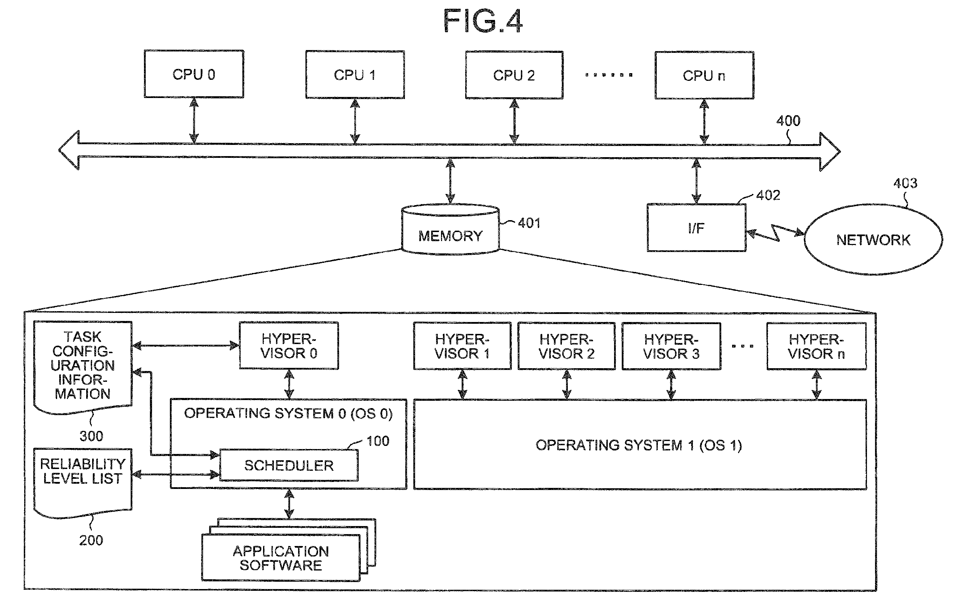

FIG. 4 is a block diagram of a hardware configuration of the multi-core processor system. In FIG. 4, a multi-core processor system 400 includes CPU 0 to CPU n (n≥1), memory 401, and an interface (I/F) 402, respectively connected by a bus 400.

Here, a multi-core processor is a processor equipped with multiple cores. Provided multiple cores are equipped, the multi-core processor may be a single processor equipped with multiple cores, or a group of single-core processors in parallel. In the first embodiment, for the sake of simplicity, description will be given using an example of a group of single-core processors in parallel.

The memory 401 is shared memory storing programs such as application software and system software (i.e., hypervisor 0 to hypervisor n, OS 0 and OS 1 that includes the scheduler 100). The memory 401 further stores system files such as the reliability level list 200 and the task configuration information 300. The memory 401, for example, includes Read Only Memory (ROM), Random Access Memory (RAM), flash memory, etc.

In the first embodiment, assuming n=3, a total of 4 CPUs are assumed. Further, CPUs 0 to 3 have independently operable cores, cache, registers, etc.

CPU 0 is a master CPU that governs overall control of the multi-processor system; CPU 1 to CPU 3 are slave CPUs. For example, ROM stores the above programs and RAM is used as work areas of CPUs 0 to 3. Programs stored in the memory 401 are loaded by a CPU, whereby processes encoded by the programs are executed by the CPU.

CPU 0 loads OS 0, which includes the hypervisor 0 and the scheduler 100, and executes the respective encoded processes. CPU 1 loads hypervisor 1 and OS 1, and executes the respective encoded processes.

CPU 2 loads hypervisor 2 and OS 1, and executes the respective encoded processes. CPU 3 loads hypervisor 3 and OS 1, and executes the respective encoded processes.

Here, CPUs 1 to 3 execute hypervisor processing by hypervisors 1 to 3, respectively and thereby, can execute processing identical to the processing of OS 1. Further, CPUs 0 to 3, upon receiving an invocation instruction for a thread, generate the thread by the OSs.

Hypervisors 0 to 3 are programs that run directly on hardware such as CPUs 0 to 3. Here, normal hypervisor processing is processing that manipulates a special register for performing operations that cannot be performed by a typical program such as CPU cache control and I/O operation, and similarly, normal hypervisor processing is processing that operates using available areas in the shared memory, which cannot be read or written to by a typical program.

Further, CPUs 1 to 3, before executing the normal hypervisor processing above by hypervisors 1 to 3, send to hypervisor 0, information indicating that the respective CPUs 1 to 3 are not stalled. Whether a CPU is stalled is determined by whether a program counter is properly operating. Further, a CPU that has stalled cannot send information indicating that the CPU is not stalled. Here, a CPU that has stalled is referred to as a stalled CPU.

CPU 0, before executing the normal hypervisor processing above by hypervisor 0, receives the information that is sent from hypervisors 1 to 3 and indicates that the CPUs that are not stalled, and executes processing to detect a stalled CPU. If a stalled CPU is detected, the CPU 0 executes processing to identify the thread that has crashed consequent to the stalled CPU, and executes normal hypervisor processing. On the other hand, if no stalled CPU is detected, the CPU 0 executes normal hypervisor processing.

The I/F 402 is connected, through a communication line, to a network 403 such as a Local Area Network (LAN), a Wide Area Network (WAN), and the internet, and via the network 403 is connected to other apparatuses. The I/F 402 administers an internal interface with the network 403, and controls the input and output of data with respect to external apparatuses. For example, a modem or a LAN adaptor may be employed as the I/F 402.

Although not depicted, the multi-core processor system 400 may include a display, a keyboard, etc.. A display displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display.

A keyboard includes, for example, keys for inputting letters, numerals, and various instructions and performs the input of data. Alternatively, a touch-panel-type input pad or numeric keypad, etc. may be adopted.

### (Functional configuration of multi-core processor system according to first embodiment)

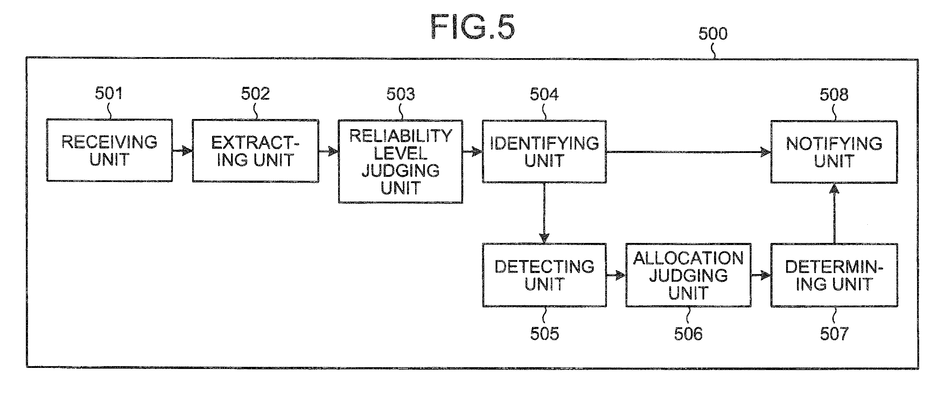

FIG. 5 is a block diagram of a functional configuration of the multi-core processor system according to the first embodiment. A multi-core processor system 500 includes a receiving unit 501, an extracting unit 502, a reliability level judging unit 503, an identifying unit 504, a detecting unit 505, an allocation judging unit 506, a determining unit 507, and a notifying unit 508. Each function (the receiving unit 501 to the notifying unit 508), for example, is implemented by executing on CPU 0, which is the master CPU, processes encoded by the scheduler 100 and stored in the memory 401 depicted in FIG. 4.

### (Processing related to thread invocation)

The receiving unit 501 receives an invocation instruction for a thread or a process. For example, CPU 0, which is the master CPU, receives an application start instruction that is from the user. Alternatively, when a thread under execution newly invokes a thread, CPU 0 receives a thread invocation instruction from the thread under execution.

The extracting unit 502 extracts from the reliability level list 200 and based on the application name 201, a reliability level of a given application invoking the given thread received by the receiving unit 501.

The reliability level judging unit 503, based on the reliability level extracted by the extracting unit 502 and a specified threshold, judges whether the given application is a high-reliability application. For example, if the reliability level is greater than or equal to the specified threshold, the given application is judged to a high-reliability application and if less than the specified threshold, the given application is judged to be a low-reliability application.

The identifying unit 504, if the given application has been judged by the reliability level judging unit 503 to be a high-reliability application, identifies among all of the CPUs 0 to 3, a CPU that has not been allocated a low-reliability thread.

Here, a CPU that has not been allocated a low-reliability thread is a core that has been allocated a high-reliability thread, or a CPU that has not been allocated any threads.

The identifying unit 504, if the given application has been judged by the reliability level judging unit 503 to be a low-reliability application, identifies in the multi-core processor, a CPU that has not been allocated a high-reliability thread.

A CPU that has not been allocated a high-reliability thread is a core that has been allocated a low-reliability thread, or a CPU that has not been allocated any threads.

The notifying unit 508 gives to the core identified by the identifying unit 504, an invocation instruction for the given thread.

The identifying unit 504, if the given application has been judged to be a low-reliability application by the reliability level judging unit 503, identifies in the multi-core processor, a core that has not been allocated the master thread of a low-reliability application.

The identifying unit 504, if the given application has been judged by the reliability level judging unit 503 to be a high-reliability application and only when the given thread is a master thread, identifies in the multi-core processor, a CPU that has not been allocated a low-reliability thread.

When the given thread is a high-reliability master thread in a case where the given application is judged to be a high-reliability application by the reliability level judging unit 503, the notifying unit 508 gives to the CPU identified by the identifying unit 504, an invocation instruction for the given thread. On the other hand, when the given thread is not a high-reliability master thread, the notifying unit 508 gives to an arbitrary CPU in the multi-core processor, an invocation instruction for the given thread. The given thread not being a high-reliability master thread indicates that the given thread is a high-reliability slave thread.

In light of the description above, an allocation example will be described with reference to the drawings.

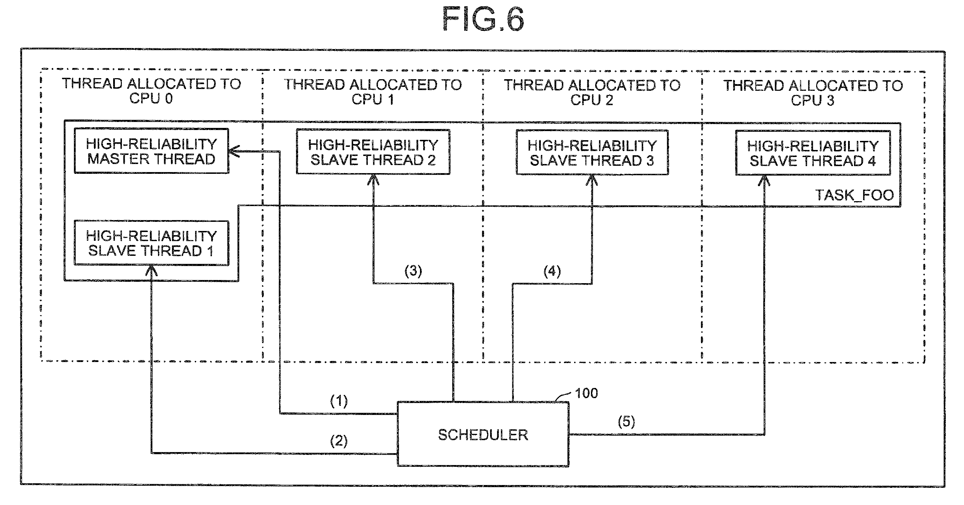

FIG. 6 is a diagram depicting an example where a high-reliability thread is allocated. For example, upon an invocation instruction for application A from the user, CPU 0 receives an allocation instruction for the master thread of application A. Here, it is assumed that none of the CPUs 0 to 3 have been allocated a thread. Although not depicted, no information is described in the task configuration information here.

For example, CPU 0 accesses the reliability level list 200 and based on the application name 201, extracts the value of the reliability level 202. In this example, the value of the reliability level 202 for application A is 3.

For example, CPU 0 judges whether the reliability level of application A is at least a specified threshold. In the first embodiment, the specified threshold is 3. For example, if the reliability level of application A is judged by CPU 0 to be greater than or equal to the specified threshold, application A is judged to be a high-reliability application. On the other hand, for example, if the reliability level of application A is judged by CPU 0 to be less than the specified threshold, application A is judged to be a low-reliability application. In this example, since the value of the reliability level 202 for application A is 3, application A is judged to be a high-reliability application.

For example, if application A is judged to be a high-reliability application, CPU 0 identifies among CPUs 0 to 3 and based on the task configuration information, a CPU that has not been allocated a low-reliability thread.

For example, CPU 0 judges for each record of information related to the applications described in the task configuration information, whether the reliability level flag is 1. As described, the information related to each application is allocation information that indicates to which CPU, threads of the application have been allocated and includes a reliability level flag that indicates whether the application is a high-reliability application.

CPU 0 identifies a CPU described in the information related to an application for which the reliability level flag has been judged to be 0. An identified CPU is a CPU that has been allocated a low-reliability thread.

For example, CPU 0 excludes any CPU that has been allocated a low-reliability thread and identifies the CPUs remaining among CPUs 0 to 3 to be CPUs that have not been allocated a low-reliability thread. Here, each of the CPUs 0 to 3 is identified as a CPU that has not been allocated a low-reliability thread.

For instance, CPU 0 gives to any one among CPUs 0 to 3, an invocation instruction for a master process. When multiple CPUs that have not been allocated a low-reliability thread are present, the CPU that is to be allocated the master process is determined by allocation processing that is identical to conventional allocation processing and therefore, description thereof is omitted. In this example, CPU 0 is given the invocation instruction ((1) in the figure). Furthermore, CPU 0 invokes the master process.

Further, for example, before the invocation instruction is given to CPU 0, CPU 0 accesses the memory 401, and newly adds to the task configuration information, information related to application A. For example, the task name and the value of the reliability level flag are described. In the information related to application A, allocation information indicative of the CPU that has been allocated the master thread is described.

When CPU 0 receives by the scheduler 100, allocation instructions for high-reliability slave threads from a high-reliability master thread, the high-reliability master thread is allocated to an arbitrary CPU among the CPUs 0 to 3, whereby the high-reliability slave threads are allocated as depicted by (2) to (5) in the figure.

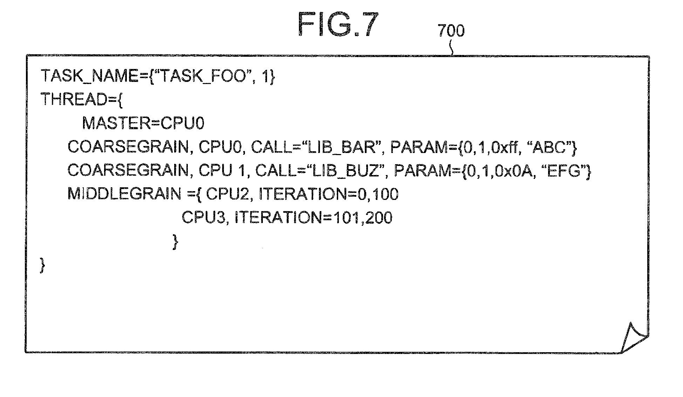

FIG. 7 is a diagram depicting an example of the task configuration information after allocation of high-reliability threads. "TASK_FOO" alone is described in the task configuration information 700. Similar to the task configuration information 300 above, "TASK_FOO" is information related to application A. Aside from not describing "TASK_XYZ", description concerning "TASK_FOO" in the task configuration information 700 is identical to that in the task configuration information 300 and therefore, further detailed description will be omitted.

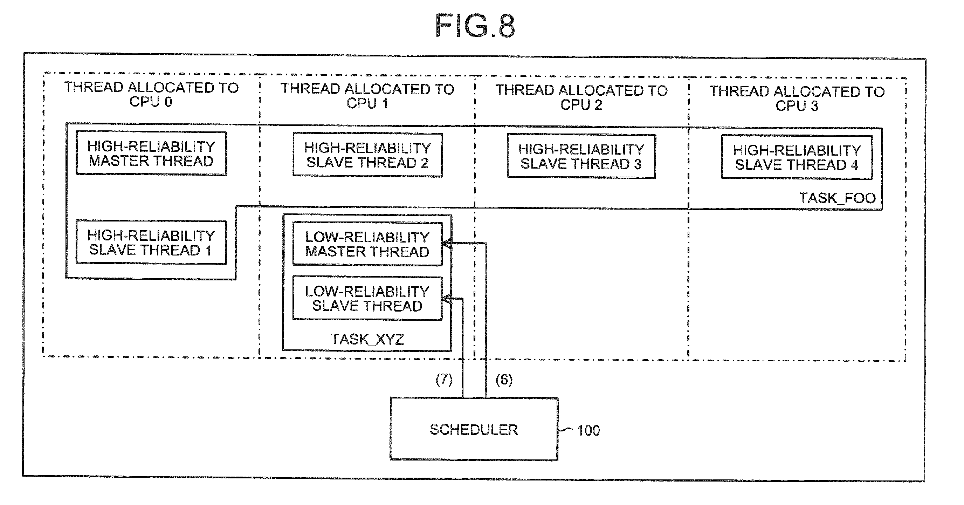

FIG. 8 is a diagram depicting an example of low-reliability thread allocation. In this example, an invocation instruction for application B is assumed to be given by a user operation. Herein, only differences with the above example of high-reliability application allocation will be described.

For example, CPU 0 judges whether the reliability level of application B is at least the specified threshold. In this example, in the reliability level list 200, the value of the reliability level 202 for application B is 2 and therefore, application B is judged to be a low-reliability application.

For instance, when application B is judged to be a low-reliability application, CPU 0 identifies among the CPUs 0 to 3 and based on the task configuration information 700, a CPU that has not been allocated a high-reliability master thread.

For example, CPU 0 judges for each record of information related to the applications described in the task configuration information 700, whether the reliability level flag is 1. For instance, CPU 0 identifies a CPU described in a MASTER assignment statement in the information related to an application for which the reliability level flag is 1. The identified CPU is a CPU that has been allocated a high-reliability master thread. For example, CPU 0 excludes any CPU that has been allocated a high-reliability master thread and identifies the remaining CPUs among CPUs 0 to 3 to be CPUs that have not been allocated a high-reliability master thread.

Here, the master process of "TASK_FOO" is allocated to CPU 0 and therefore, CPUs 1 to 3 are identified as CPUs that have not been allocated a master process of a high-reliability application.

For example, CPU 0 gives to any one among CPUs 1 to 3, an invocation instruction for a low-reliability master thread. In this example, CPU 1 is given the invocation instruction ((6) in FIG. 8). CPU 1 invokes the low-reliability master thread.

Further, for example, before the invocation instruction is given to CPU 1, CPU 0 accesses the memory 401; adds to the task configuration information 700, information related to application B; and describes information indicative of the CPU that has been allocated the master thread. The task configuration information 300 depicted in FIG. 3 is the task configuration information 700 to which information related to application B has been added.

When an allocation instruction for a low-reliability slave thread is given from the low-reliability master thread of application B, CPU 0 receives the allocation instruction and again performs the same processing and thus, as depicted by (7) in FIG. 8, a low-reliability slave thread is allocated.

The reference of description returns to FIG. 5. The detecting unit 505 detects among the CPUs identified by the identifying unit 504, a CPU that has not been allocated any threads.

The allocation judging unit 506, when the given thread has been allocated to a CPU detected by the detecting unit 505, judges whether a high-reliability master thread has been allocated to all of the CPUs 0 to 3 of the multi-processor.

The determining unit 507, when all of the CPUs 0 to 3 have been judged (by the allocation judging unit 506) to have been allocated a high-reliability master thread, excludes the CPU detected by the detecting unit 505 and determines from among the remaining CPUs identified by the identifying unit 504, a CPU that is to be allocated the given thread.

The notifying unit 508 gives to the CPU determined by the determining unit 507, an allocation instruction for the given thread.

The allocation judging unit 506, when the given thread has been allocated to the CPU detected by the detecting unit 505, judges whether a low-reliability thread has been allocated to all of the CPUs 0 to 3.

The determining unit 507, when all of the CPUs have been judged (by the allocation judging unit 506) to have been allocated a low-reliability thread, excludes the CPU detected by the detecting unit 505 and determines from among the remaining CPUs identified by the identifying unit 504, a CPU that is to be allocated the given thread.

The notifying unit 508 gives to the CPU determined by the determining unit 507, an allocation instruction for the given thread.

Herein, description will be given in light of the processing above and with reference to the drawings.

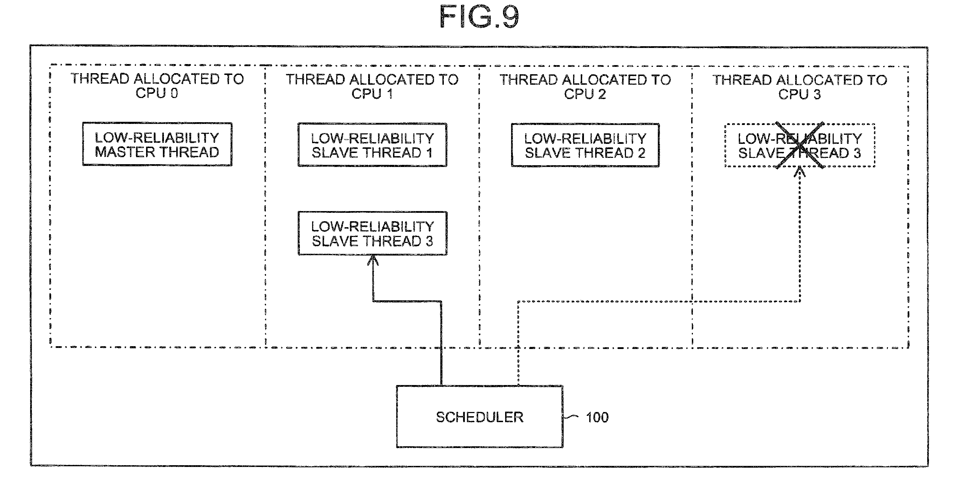

FIG. 9 is a diagram depicting an example where none of the CPUs 0 to 3 have been allocated a low-reliability thread. Here, for example, the low-reliability master thread of application B, low-reliability slave thread 1, and low-reliability slave thread 2 are assumed to be preliminarily allocated. The task configuration information is not depicted. An allocation instruction for low-reliability slave thread 3, from the low-reliability master thread is assumed to be given to CPU 0.

For example, CPU 0 judges for each record of information related to the applications described in the task configuration information, whether the reliability level flag is 1, and identifies a CPU described in the information related to an application for which the reliability level flag has been judged to be 1. In this example, CPU 0 is identified.

For example, CPU 0 identifies from among CPUs 0 to 3, a CPU described in the information related to an application for which the reliability level flag has been judged to be 1. An identified CPU is a CPU that has been allocated a high-reliability thread. CPU 0 excludes any CPU allocated a high-reliability thread and identifies the remaining CPUs among CPUs 0 to 3 to be CPUs that have not been allocated a high-reliability thread. Here, all of the CPUs 0 to 3 are identified as CPUs that have not been allocated a high-reliability thread.

For instance, CPU 0 further identifies a CPU described in the information related to an application for which the reliability level flag is 0. An identified CPU is a CPU that has been allocated a low-reliability thread. For example, CPU 0 excludes any CPU that has been allocated a low-reliability thread and identifies the CPUs that remain among CPUs that have not been allocated a high-reliability thread. An identified CPU is a CPU that has not been allocated any threads. Here, a CPU that has been allocated a high-reliability thread is not present and since CPUs 0 to 2 have been allocated a low-reliability thread, CPU 3 is identified as a CPU that has not been allocated any threads.

For example, CPU 0, by CPU 3 being allocated the given thread, judges whether each of the CPUs 0 to 3 has been allocated a low-reliability thread. For example, CPU 0 judges whether the sum of a count of the CPUs that have been allocated a low-reliability thread and a count of the CPUs that have not been allocated any threads, equals the total number of CPUs.

If the sum is equal to the total number of CPUs, CPU 0 allocates the given thread to CPU 3, which has not been allocated any threads, whereby all of the CPUs 0 to 3 are judged to be allocated a low-reliability thread. If the sum does not equal the total number of CPUs, CPU 0 allocates the given thread to CPU 3, which has not been allocated any threads, whereby CPU judges that all of the CPUs 0 to 3 have not been allocated a low-reliability thread.

Here, the total number of CPUs is 4, the count of CPUs that have been allocated a low-reliability thread is 3, and the count of CPUs that have not been allocated any threads is 1. Accordingly, by allocating the given thread to CPU 3, each of the CPUs 0 to 3 is judged to be allocated a low-reliability thread.

For example, when each CPU is judged to be allocated a low-reliability thread, CPU 0 excludes CPU 3 and determines from among the CPUs that remain among CPUs 0 to 3, a CPU that is to be allocated the given thread. In this example, the CPUs that remain are CPUs 0 to 2 and the CPU that is to be allocated the given thread is determined to be CPU 1.

For example, CPU 0 gives to CPU 1, an invocation instruction for the given thread. In FIG. 9, low-reliability slave thread 3 is newly allocated to CPU 1.

Further, processing to perform control such that all of the CPUs 0 to 3 are not allocated a high-reliability master thread is processing identical to that for performing control such that all of the CPUs 0 to 3 are not allocated a low-reliability thread and therefore, description thereof is omitted.

The reference of the description returns to FIG. 5. The identifying unit 504, when the given application is judged by the reliability level judging unit 503 to be a low-reliability application, excludes CPU 0 (which is the master CPU) and identifies from among the CPUs that remain among CPUs 0 to 3, a CPU that has not been allocated a high-reliability thread.

The notifying unit 508 gives to the CPU identified by the identifying unit 504, an invocation instruction for the given thread. Therefore, CPU 0, which is the master CPU, is absolutely not allocated a low-reliability thread.

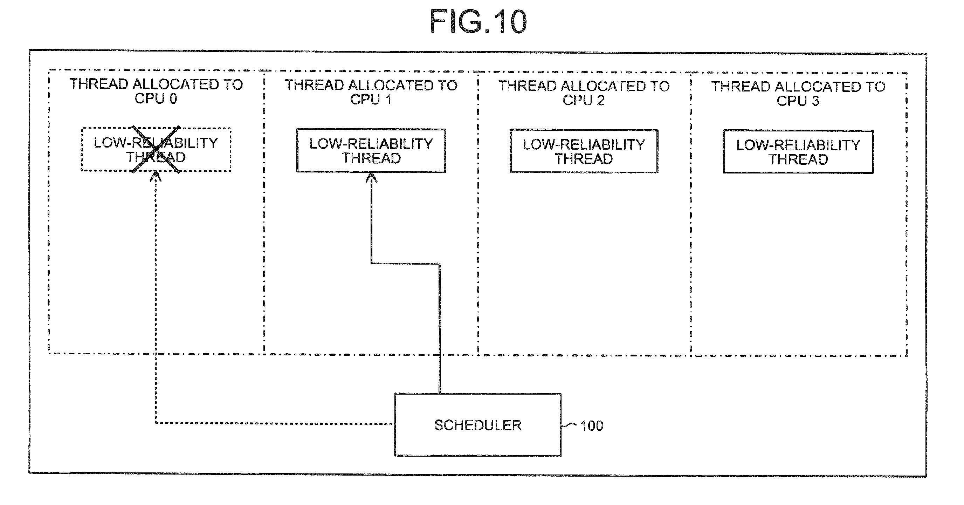

FIG. 10 is a diagram depicting an example where the master CPU is not allocated a low-reliability thread. In this example, CPUs 2 to 3 are respectively assumed to be allocated a low-reliability thread and for example, CPU 0 is assumed to receive allocation notification for a low-reliability thread. The low-reliability threads depicted in FIG. 10 represent a low-reliability master thread and a low-reliability slave thread.

For example, CPU 0 excludes CPU 0 and identifies from among the CPUs that remain among CPUs 0 to 3, a CPU that has not been allocated a high-reliability thread. In this example, CPUs 1 to 3 are identified and for example, CPU 0 gives to CPU 1, an invocation instruction for a low-reliability thread (solid line arrow in FIG. 10).

Accordingly, since CPU 0 is not allocated a low-reliability thread having a potential of crashing (dotted line arrow in FIG. 10), CPU 0 has a low potential of stalling.

Although not depicted, for example, CPU 0 may preliminarily perform control such that CPU 0 and CPU 1 are not allocated a low-reliability thread and such that CPU 2 and CPU 3 are not allocated a high-reliability master thread.

The reference of the description returns to FIG. 5. The extracting unit 502 further extracts information related to whether the given application has crashed.

The reliability level judging unit 503 judges whether the information related to whether the given application has crashed indicates that the given application has crashed.

If the given application has crashed, the notifying unit 508, without giving an invocation instruction for the given thread to any CPU, may notify the user that invocation cannot be performed because the given application has crashed.

On the other hand, if the reliability level judging unit 503 judges that the given application has not crashed, the identifying unit 504 implements the processing above, enabling an application that has crashed in the past, to not be invoked.

For example, CPU 0, upon receiving an allocation instruction for a thread, reads the reliability level list 200 and judges whether the value of the reliability level 202 is 1. CPU 0, when value of the reliability level 202 is judged to be 1, outputs notification that the given application has stalled, and does not output a thread invocation instruction to any CPU. The form of output may be, for example, display on a display and transmission to an external apparatus by the I/F' 402.

Further, in the first embodiment, although CPUs that are to be allocated processes are determined based on whether the given application is a high-reliability application, configuration may be such that CPUs are determined by further dividing the reliability levels indicating a given application to be, for example, a high-reliability application, a low-reliability application, moderate-reliability application.

### (Control processing by multi-core processor system)

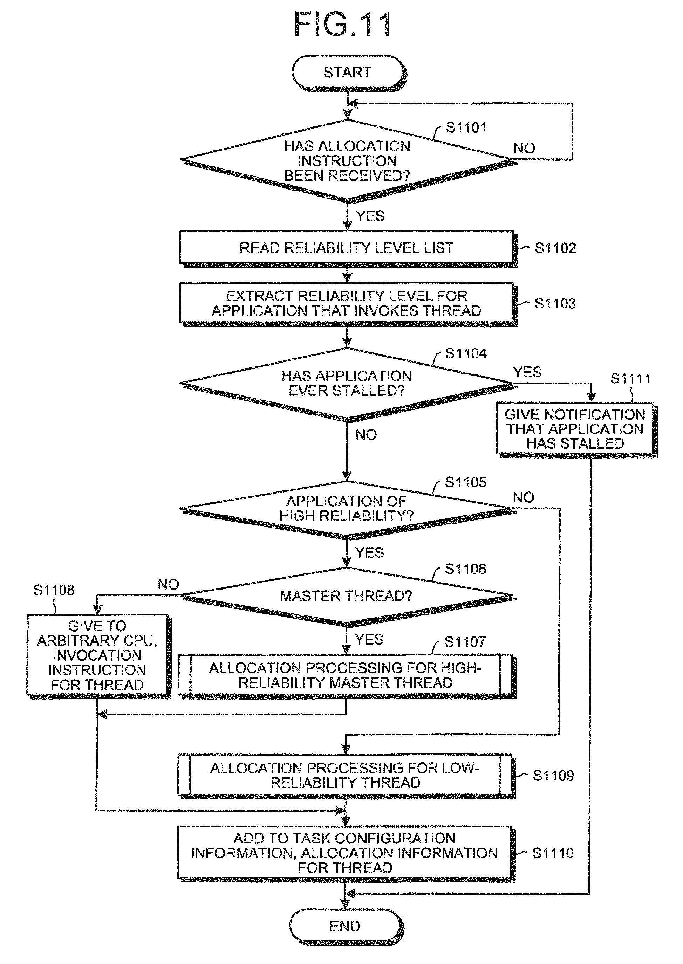

FIG. 11 is a flowchart depicting an example of control processing by the multi-core processor system according to the first embodiment. CPU 0 judges whether an allocation instruction for a given thread has been received by the scheduler 100 (step S1101), and if not (step S1101: NO), returns to step S1101. On the other hand, if CPU 0 judges that an allocation instruction has been received by the scheduler 100 (step S1101: YES), CPU 0 reads the reliability level list (step S1102).

CPU 0, via the scheduler 100, extracts from the reliability level list 200, the reliability level for a given application that invokes the thread (step S1103), and judges whether the given application has ever stalled (step S1104). If CPU 0, via the scheduler 100, judges that the given application has never stalled (step S1104: NO), CPU 0 judges whether the given application is an application of high reliability (step S1105).

If CPU 0, via the scheduler 100, judges that the given application is of high reliability (step S1105: YES), CPU 0 judges whether the given thread is a master thread (step S1106). If CPU 0, via the scheduler 100, judges that the given thread is a master thread (step S1106: YES), CPU 0 implements allocation processing for a high-reliability master thread (step S1107).

On the other hand, if CPU 0, via the scheduler 100, judges that the given thread is not a master thread (step S1106: NO), CPU 0 gives to an arbitrary CPU, an invocation instruction for the given thread (step S1108).

At step S1105, if CPU 0, via the scheduler 100, judges that the given application is an application not of high reliability (step S1105: NO), CPU 0 implements allocation processing for a low-reliability thread (step S1109).

After any one of step S1107, step S1108 and step S1109, CPU 0, via the scheduler 100, adds to the task configuration information, allocation information for the given thread (step S1110), and ends the processing.

On the other hand, at step S1104, if CPU 0, via the scheduler 100, judges that the given application has stalled in the past (step S1104: YES), CPU 0 notifies the user that the given application has stalled (step S1111), and ends the processing.

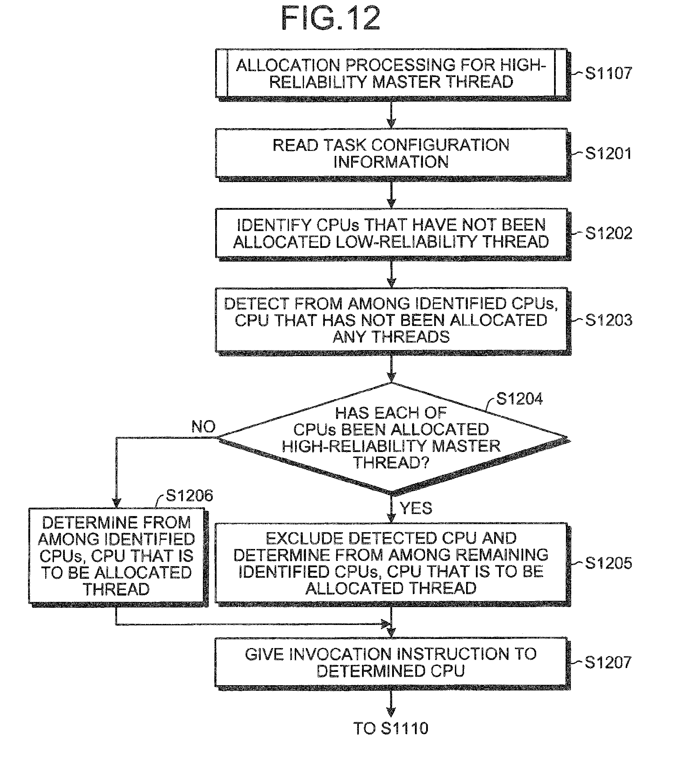

FIG. 12 is a flowchart depicting details of the allocation processing for a high-reliability master thread (step S1107) depicted in FIG. 11. CPU 0, via the scheduler 100, reads the task configuration information (step S1201), and identifies CPUs that have not been allocated a low-reliability thread (step S1202). CPU 0, via the scheduler 100, detects from among the identified CPUs, a CPU that has not been allocated any threads (step S1203).

CPU 0 judges whether each of the CPUs in the multi-core processor has been allocated a high-reliability master thread (step S1204).

If CPU 0, via the scheduler 100, judges that each of the CPUs has been allocated a high-reliability master thread (step S1204: YES), CPU 0 excludes the detected CPU and determines from among the remaining identified CPUs, a CPU that is to be allocated the given thread (step S1205). The method of determination is identical to conventional scheduling processing and therefore, detailed description thereof is omitted.

On the other hand, if CPU 0, via the scheduler 100, judges that each of the CPUs is not allocated a high-reliability master thread (step S1204: NO), CPU 0 from among the identified CPUs, determines a CPU that is to be allocated the given thread (step S1206).

After any one among step S1205 and step S1206, CPU 0, via the scheduler 100, gives an invocation instruction for the given thread to the determined CPU (step S1207), and transitions to step S1110.

On the other hand, if CPU 0, via the scheduler 100, judges that each of the CPUs has not been allocated a high-reliability master thread (step S1204: NO), CPU 0 transitions to step S1206.

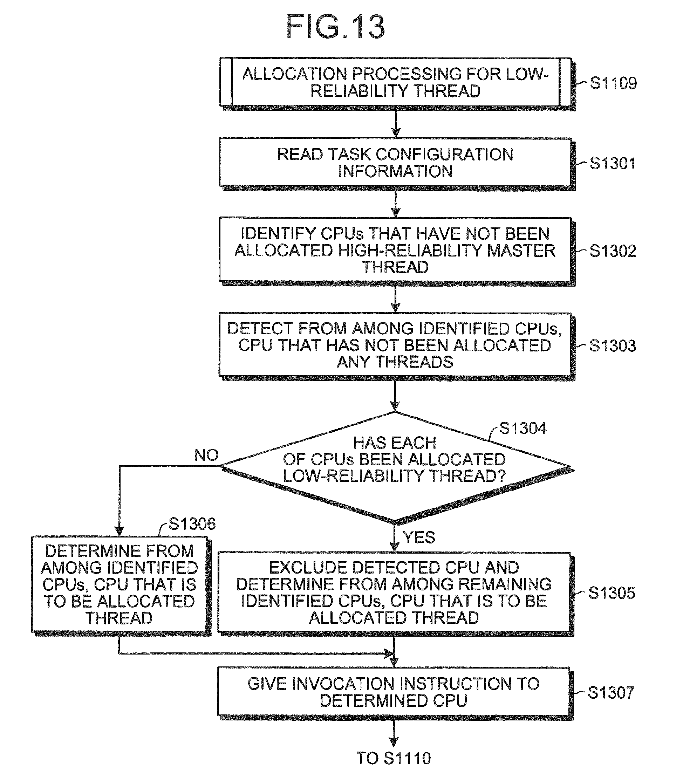

FIG. 13 is a flowchart depicting details of the allocation processing for a low-reliability thread (step S1109) depicted in FIG. 11. CPU 0, via the scheduler 100, reads the task configuration information (step S1301), and identifies CPUs that have not been allocated a high-reliability master thread (step S1302) . CPU 0, via the scheduler 100, detects from among the identified CPUs, a CPU that has not been allocated a thread (step S1303), and by allocating the given thread to the detected CPU, judges whether each of the CPU has been allocated a low-reliability thread (step S1304) .

If CPU 0, via the scheduler 100, judges that each of the CPUs has been allocated a low-reliability thread (step S1304: YES), CPU 0 excludes the detected CPU and determines from among the remaining identified CPUs, a CPU that is to be allocated the given thread (step S1305) .

On the other hand, if CPU 0, via the scheduler 100, judges that each of the CPUs has not been allocated a low-reliability thread (step S1304: NO), CPU 0 determines from among the identified CPUs, a CPU that is to be allocated the given thread (step S1306). CPU 0, via the scheduler 100, gives an invocation instruction for the given thread to the determined CPU (step S1306), and transitions to step S1110.

CPU 0, via the OS, extracts a priority level when an application is downloaded or installed, registers the application name into the reliability level list, and registers the extracted priority level as the reliability level.

### (Registration processing of multi-core processor system)

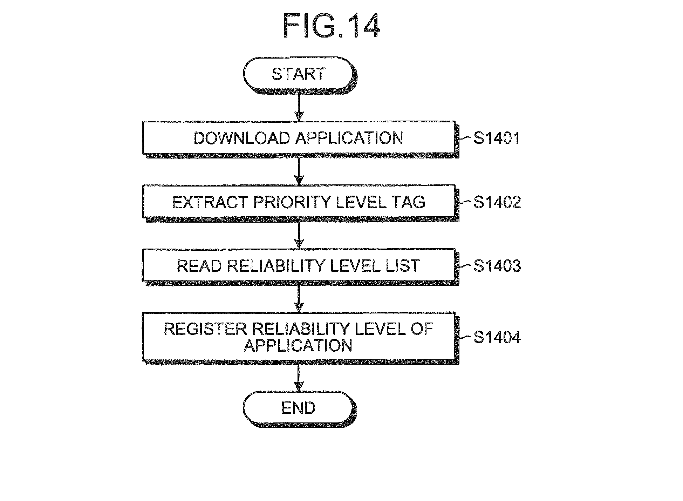

FIG. 14 is a flowchart depicting an example of registration processing by the multi-core processor system. Here, registration processing when CPU 0, via the OS, registers a reliability level to the reliability level list is depicted. CPU 0, via OS 0, downloads an application (step S1401), and extracts a priority level tag (step S1402). CPU 0, via OS 0, reads the reliability level list (step S1403), and registers the reliability level of the application (step S1404). The priority level tag is, for example, a tag indicative of the purveyor of the application, and the reliability level of the application is registered into the reliability level list as high reliability if the purveyor developed the application based on design specifications of the multi-core processor.

### (Second embodiment)

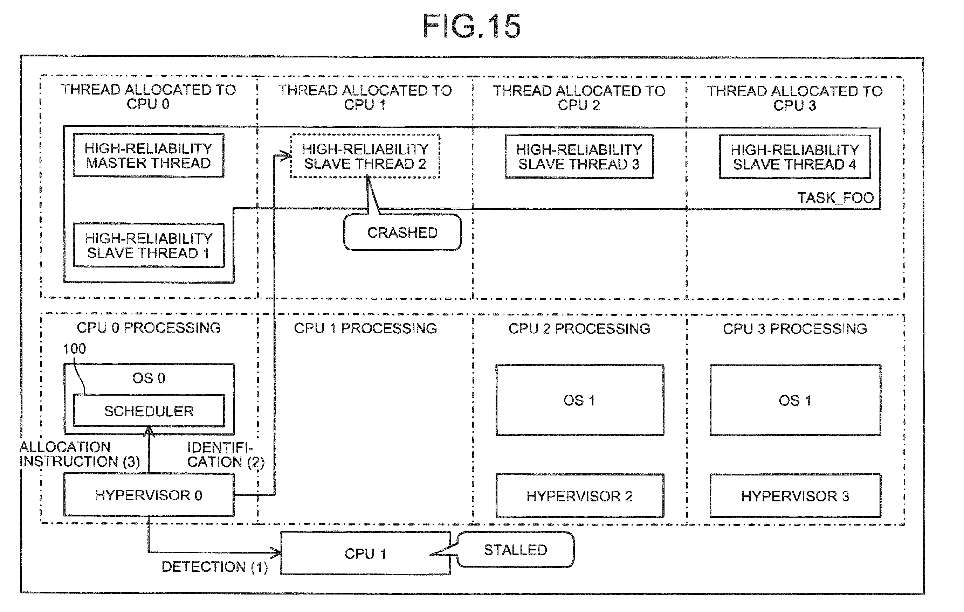

FIG. 15 is a diagram depicting an implementation example of the control processing according to the second embodiment. In the second embodiment, an example is given where a thread that has crashed consequent to a stalled CPU is immediately re-invoked. Here, a stalled CPU is a CPU that does not operate the program counter and cannot execute processing by software. CPU 0, via hypervisor 0, detects a stalled CPU ((1) in FIG. 15). In this example, CPU 1 is detected as a stalled CPU.

CPU 0 identifies a thread that has crashed consequent to the stalled CPU ((2) in FIG. 15). In this example, high-reliability slave thread 2 is the thread identified. Lastly, CPU 0, via hypervisor 0, gives to the scheduler 100, an allocation instruction for the identified thread ((3) FIG. 15) .

CPU 0, via the scheduler 100, allocates the high-reliability slave thread to any one among CPU 1, CPU 2, and CPU 3.

Here, issues related to recovery processing will be described. If the first and the second conventional technologies are used, since the operation state is saved, memory and the thread states have to be ensured, and in an integrated system, since there are few memory resources, the securing of resources is difficult. Accordingly, a problem arises in that the system becomes huge in order to secure resources.

Thus, in the second embodiment, a thread that has crashed consequent to a stalled CPU is immediately re-invoked, under specifications for a small amount of memory. In the second embodiment, components identical to those in the first embodiment will be given the same reference numerals used in the first embodiment, and description thereof will be omitted.

### (Multi-core processor system according to second embodiment)

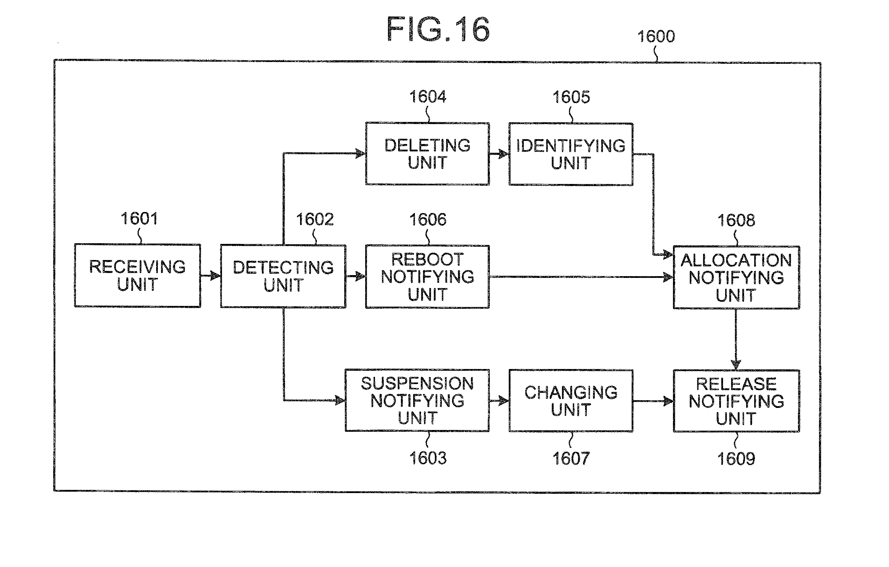

FIG. 16 is a block diagram depicting a functional configuration of the multi-core processor system according to the second embodiment. A multi-core processor system 1600 includes a receiving unit 1601, a detecting unit 1602, a suspension notifying unit 1603, a deleting unit 1604, an identifying unit 1605, a reboot notifying unit 1606, a changing unit 1607, an allocation notifying unit 1608, and a release notifying unit 1609. Each of the functions (the receiving unit 1601 to the release notifying unit 1609) are implemented, for example, by executing on CPU 0, processes encoded by hypervisor 0 and stored in the memory 401 depicted in FIG. 4.

The receiving unit 1601 receives information indicating that stalling has not occurred, the information being received from the CPUs in the multi-core processor, with the exception of 1 CPU. For example, the receiving unit 1601 receives an in-operation indicator signal sent by CPUs 1 to 3 that execute hypervisor processing by hypervisors 1 to 3.

The detecting unit 1602 detects among the CPUs in the multi-core processor, a stalled CPU. For example, CPU 0 detects, as a stalled CPU, a CPU in the multi-core processor from which an in-operation indicator signal was not received. Here, if a stalled CPU is not detected by the detecting unit 1602, normal hypervisor processing is executed. Hereinafter, processing for a case where a stalled CPU is detected by the detecting unit 1602 will be described.

A portion of the memory 401, allocated to the stalled CPU is released.

The suspension notifying unit 1603 gives to all of the CPUs 0 to 3, a temporary suspension instruction applicable to all applications. The deleting unit 1604 deletes from the task configuration information 300, information related to the application that invokes the thread that caused the CPU detected by the detecting unit 1602 to stall. A thread that causes a CPU to stall is referred to as a crash thread.

The changing unit 1607 changes the reliability level of the application that is described in the reliability level list and that invokes the crash thread that caused the stalled CPU detected by the detecting unit 1602 to stall. The changing unit 1607 changes the reliability level to a reliability level indicative of crashing.

The identifying unit 1605 identifies a thread that has crashed consequent to the stalling of the stalled CPU detected by the detecting unit 1602. Here, a thread that has crashed consequent to the stalling of a stalled CPU is a thread that executed processing normally immediately before the stalling of the stalled CPU and crashed consequent to the stalling. Accordingly, the crash thread described above is not included among threads that have crashed consequent to the stalling of a CPU. For example, the identifying unit 1605 reads the task configuration information 700, and from the task configuration information 700, identifies threads allocated to the stalled CPU.

The reboot notifying unit 1606 gives a reboot instruction to the stalled CPU detected by the detecting unit 1602. For example, CPU 0 gives a reset instruction to the stalled CPU. A reset instruction is a hypervisor privileged instruction.

The allocation notifying unit 1608 gives to the scheduler 100, a thread allocation instruction instructing allocation of the thread identified by the identifying unit 1605, to all of the CPUs 0 to 3, exclusive of the stalled CPU. For example, CPU 0 outputs information indicative of the allocation instruction to a register of CPU 0.

Consequently, CPU 0, via the scheduler 100, receives the thread allocation instruction, and executes allocation processing for allocating the thread to the multi-core processor. For example, CPU 0 executes the processing described in the first embodiment.

The allocation notifying unit 1608 gives to the scheduler 100, an allocation instruction for the thread identified by the identifying unit 1605 after the stalled CPU has been rebooted.

The release notifying unit 1609 receives notification of the thread allocation instruction from the allocation notifying unit 1608 and when the thread is allocated by the scheduler 100, gives notification to CPUs 0 to 3, to release the temporary suspension.

In light of the description above, an example of re-invocation of a thread that has crashed consequent to a stalled CPU will be described with reference to the drawings. In the second embodiment, description will be given using, as an example of the state before crashing, the allocation results depicted in FIG 9 and the task configuration information 300 depicted in FIG. 3.

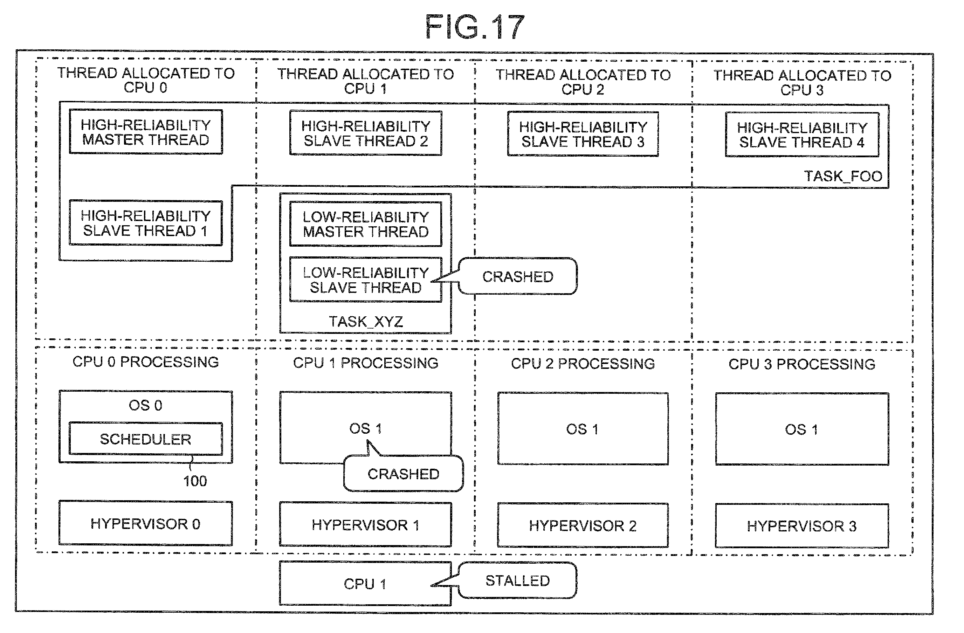

FIG. 17 is a diagram depicting an example where a thread has crashed. Here, a low-reliability slave thread allocated to CPU 1 is assumed to have crashed, and OS 1 is assumed to have crashed consequent to the crashing of the low-reliability slave thread, whereby the program counter stops, causing CPU 1 to stall.

CPU 0 processing depicted in FIG. 17 represents processing by OS 0 and processing by hypervisor 0; and processing by CPU 1, processing by OS 1, and processing by hypervisor 1. CPU 2 processing represents processing by OS 1 and processing by hypervisor 2; and CPU 3 processing represents processing by OS 1 and processing by hypervisor 3.

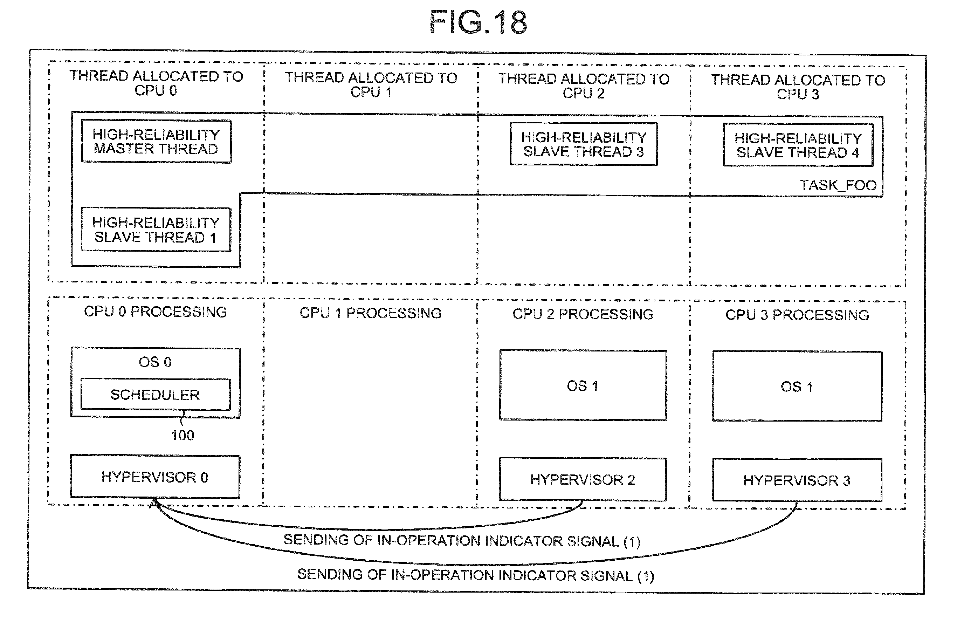

FIG. 18 is a diagram depicting an example where each CPU sends an in-operation indicator signal to CPU 0. For example, in a case where CPUs 0 to 3 have not stalled, CPUs 1 to 3, via respective hypervisors, periodically send to CPU 0, information that the CPU 1 to 3 has not stalled. After sending the information, CPUs 1 to 3, via respective hypervisors, implement normal hypervisor processing.

CPU 2 and CPU 3, via hypervisor 2 and hypervisor 3, respectively, send to CPU 0, information (hereinafter, "in-operation indicator signals) indicating that CPU 2 and 3 have not stalled ((1) in FIG. 18). On the other hand, since CPU 1 has stalled, CPU 1, via hypervisor 1, cannot send an in-operation indicator signal to CPU 0.

For example, CPU 0, via hypervisor 0, receives in-operation indicator signal from each CPU. CPU 0 detects CPUs that cannot send an in-operation indicator signal. Here, a CPU that cannot send an in-operation indicator signal is a stalled CPU.

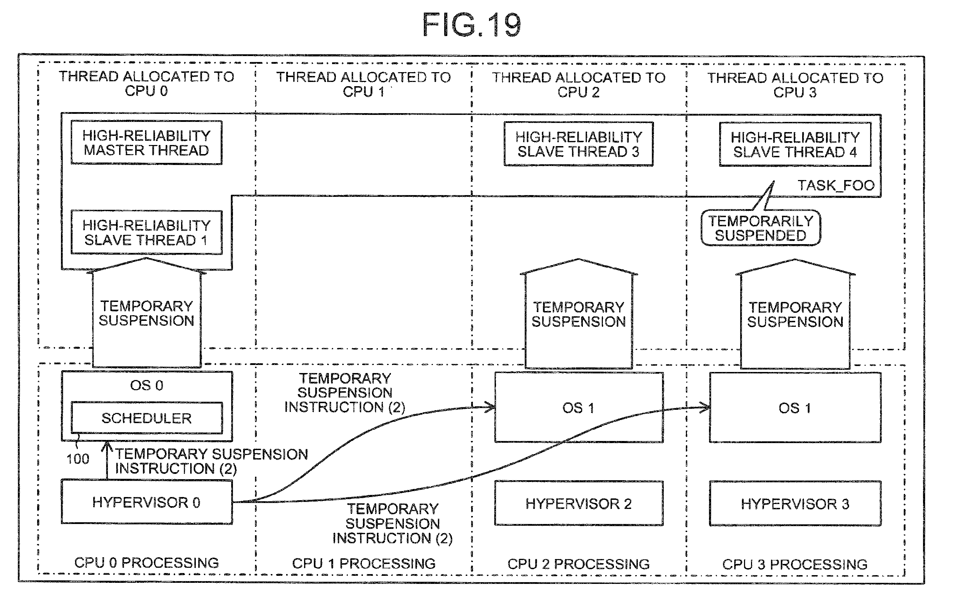

FIG. 19 is a diagram depicting an example where an application is suspended. For example, CPU 0, upon detecting a stalled CPU and via hypervisor 0, gives to each CPU a temporary suspension instruction for the application ((2) in FIG. 19). Each CPU temporarily suspends all threads run by the OS.

For example, CPU 0 deletes all descriptions of TASK_XYZ, which is information related to application B. After the deletion, the task configuration information is identical to the task configuration information 700 depicted in FIG. 7. Identification of the thread that crashed and caused the CPU stalling is conventionally possible by the OS and therefore, detailed description thereof will be omitted.

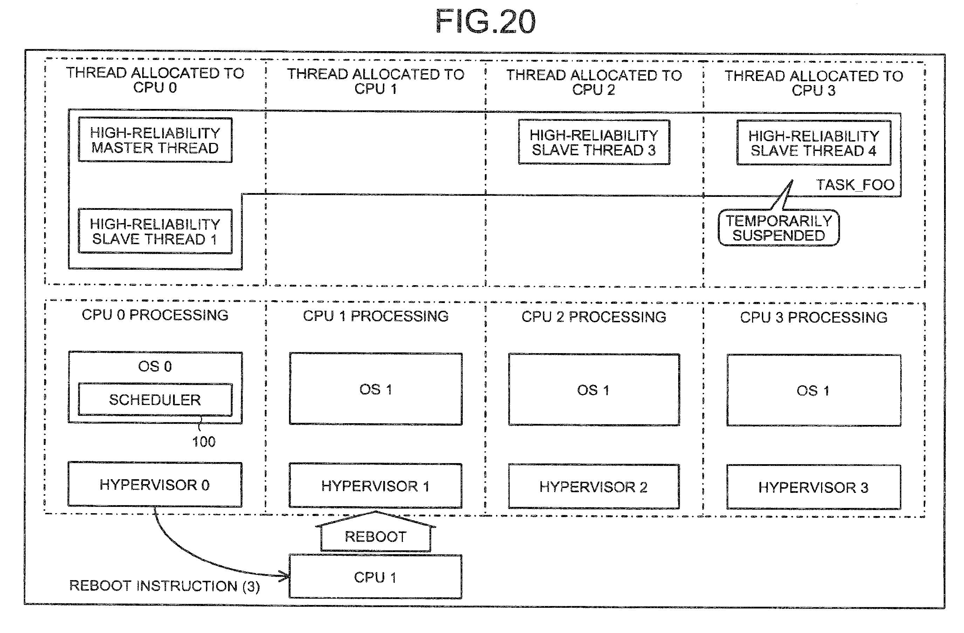

FIG. 20 is a diagram depicting an example of a reboot instruction and a thread allocation instruction. For example, CPU 0, via hypervisor 0, gives a reboot instruction to CPU 1 ((3) in FIG. 20); and upon receiving the reboot instruction, CPU 1 reboots.

For example, CPU 0, via hypervisor 0, reads the task configuration information, and identifies the thread allocated to CPU 1.

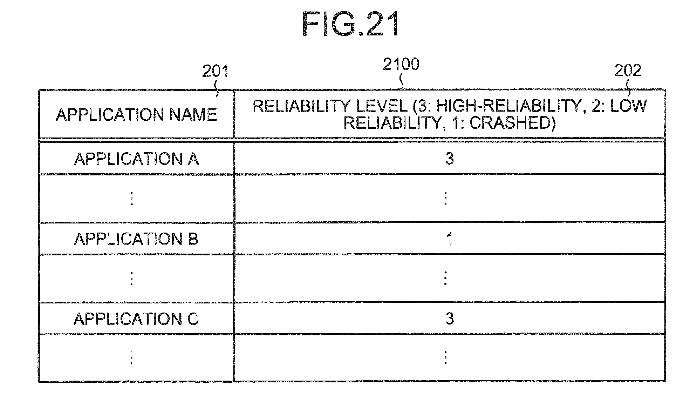

FIG. 21 is a diagram depicting an example where a reliability level in the reliability level list is changed. For example, CPU 0, via hypervisor 0, reads the reliability level list 200, and changes the value of the reliability level 202 for application B, to 1. After the change, contents of the reliability level list are as indicated in a reliability level list 2100.

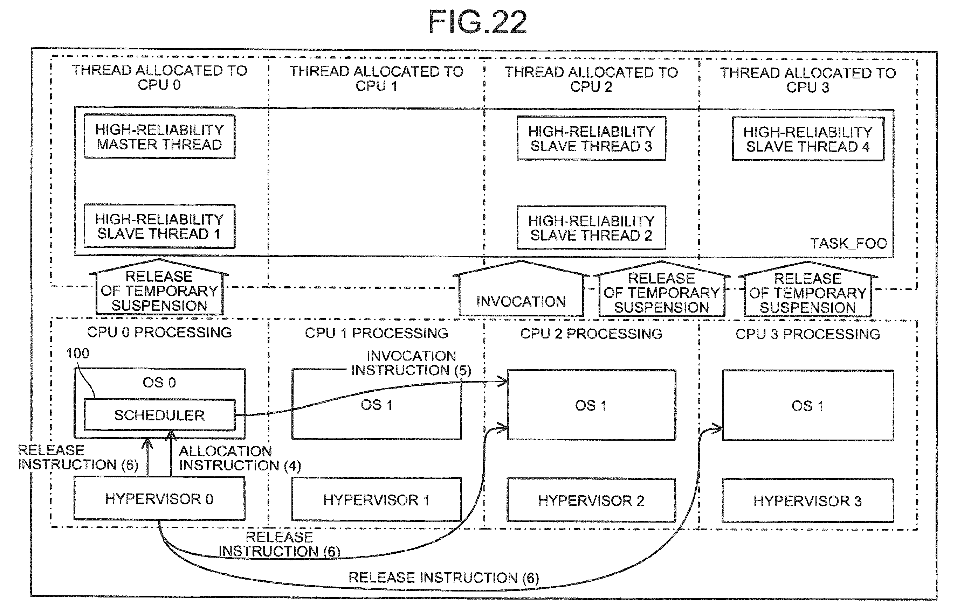

FIG. 22 is a diagram depicting an example where a thread that has crashed is allocated to a CPU, exclusive of a stalled CPU. For example, CPU 0, via hypervisor 0, gives the scheduler 100, an allocation instruction for the identified thread ((4) in FIG. 22).

If CPU 1 is in the process of rebooting, CPU 0, via the scheduler 100, allocates the identified thread to an arbitrary CPU among CPU 0, CPU 2, and CPU 3. Here, CPU 0, via the scheduler 100, gives to CPU 2, an invocation instruction for high-reliability slave thread 2 ((5) in FIG. 22). CPU 2, via OS 1, runs high-reliability slave thread 2.

CPU 0, via hypervisor 0, gives to each CPU, a release instruction for the temporary suspension ((6) in FIG. 22); each CPU, via the OS, releases the temporary suspension. Thus, a thread that has crashed consequent to a stalled CPU can be immediately re-invoked.

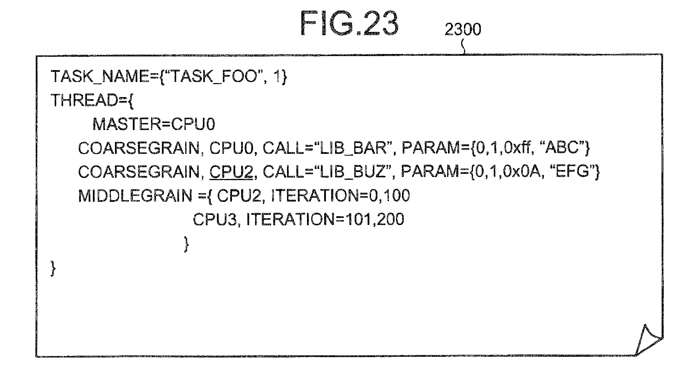

FIG. 23 is a diagram depicting an example of the task configuration information after re-invocation. Via the scheduler 100, the task configuration information is updated and in task configuration information 2300, allocation of the high-reliability slave thread to CPU 2 is indicated (underlined portion in FIG. 23).

Further, if CPU 1 has already been rebooted, CPU 0, via the scheduler 100, allocates the identified thread to an arbitrary CPU among CPUs 0 to 3.

The reference of the description returns to FIG. 16. The allocation notifying unit 1608, without sending an allocation instruction to the scheduler 100, sends an invocation instruction for the thread identified by the identifying unit 1605, to the stalled CPU that rebooted consequent to the reboot instruction from the reboot notifying unit 1606.

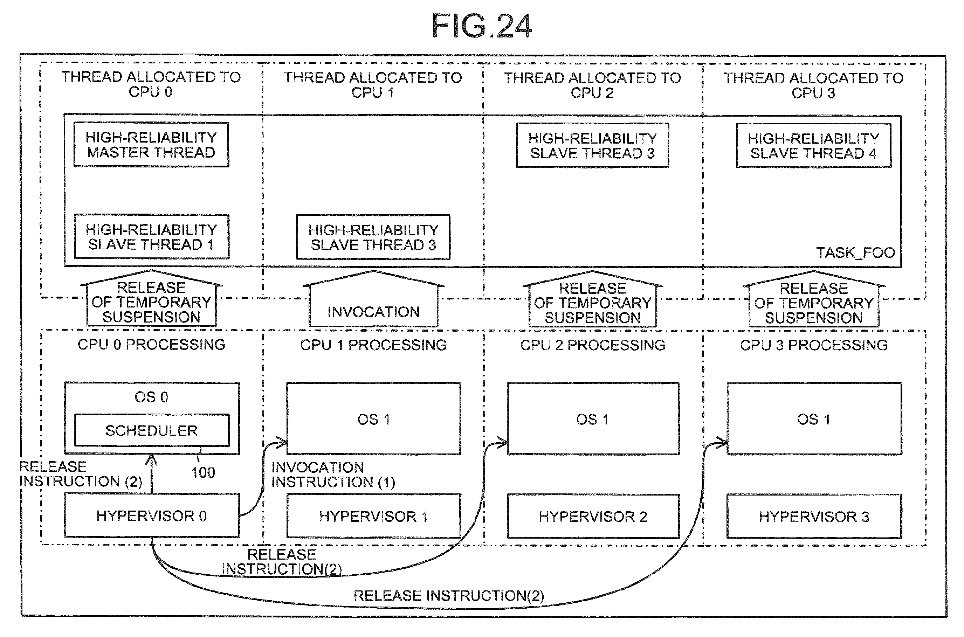

FIG. 24 is a diagram depicting an example where a thread invocation instruction is sent to a stalled CPU. For example, CPU 0, via hypervisor 0, sends to CPU 1, an invocation instruction for the thread identified after CPU 1 has rebooted ((1) in FIG. 24 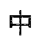 ), without sending an allocation instruction to the scheduler 100. For example, CPU 0, via hypervisor 0, sends to each CPU, a release instruction to release the temporary suspension of the application ((2) in FIG. 24).

For instance, CPU 0, via OS 0, receives the release instruction and releases the temporary suspension of each allocated thread. Further, for example, CPU 2 and CPU 3, via OS 1, receive the release instruction and release the temporary suspension of each thread allocated the CPU 2, 3. Processing for temporary suspension processing and for release of the temporary suspension is commonly known and therefore, detailed description will be omitted.

Reference of the description returns to FIG. 16, the identifying unit 1605 identifies a thread that has crashed consequent to the stalled CPU and further identifies whether the thread that has crashed is a middle grain thread or a coarse grain thread. The identifying unit 1605, upon identifying the crashed thread to be a coarse grain thread, further identifies a call function and coefficients of the call function.

On the other hand, upon identifying the crashed thread to be a middle grain thread, the identifying unit 1605, identifies the execution position executed at the time of the crash and the end position.

The allocation notifying unit 1608, when the identified thread is a coarse grain thread, simultaneously gives notification of allocation and information related to the call function. On the other hand, when the identified thread is a middle grain thread, the allocation notifying unit 1608 simultaneously gives notification of allocation as well as the execution position and the end position,

For example, CPU 0 reads the task configuration information and from the task configuration information, identifies a thread that has crashed and whether the thread that has crashed is a COARSEGRAIN (coarse level) or a MIDDLEGRAIN (middle level).

For example, CPU 0, upon identifying the crashed thread to be a COARSEGRAIN, further identifies the call function called by the thread.

On the other hand, CPU 0, upon identifying the crashed thread to be a MIDDLEGRAIN, identifies the loop number of the looped processing implemented by the thread. For example, CPU 0 identifies the loop numbers already executed, among the 101 to 200 loops of processing described in the task configuration information. Information related to the executed loop numbers is stored to the memory 401 or a register in the CPU by the OS. For example, among the 101 to 200 loops, 1 to 50 have been executed, 50 is stored.

If information of the executed loop numbers is stored in an area in the memory 401, allocated to the stalled CPU, CPU 0 saves the information of the executed loop numbers to an area in the memory 401, allocated to the CPU 0. CPU 0 saves the information before the stalled CPU is rebooted.

For example, CPU 0, via hypervisor 0, gives the scheduler 100 an allocation instruction for the crashed thread and the loop numbers that have not been executed among the loops of processing. Alternatively, for example, CPU 0, via hypervisor 0, gives the CPU 1 (which has rebooted) an invocation instruction for the crashed thread and the loop numbers that have not been executed.

### (Control processing according to the second embodiment)

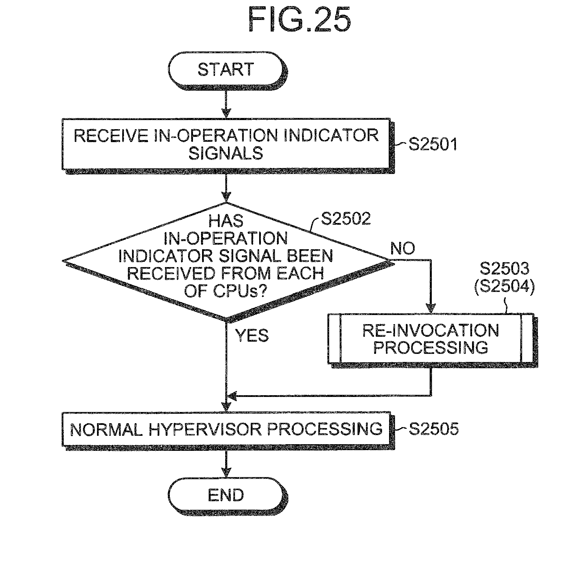

FIG. 25 is a flowchart depicting an example of control processing by the multi-core processor system according to the second embodiment. CPU 0, via hypervisor 0, receives in-operation indicator signals (step S2501), and judges whether an in-operation indicator signal has been received from each of the CPUs (step S2502) .

If CPU 0, via hypervisor 0, judges that an in-operation indicator signal has not been received from each of the CPUs (step S2502: NO), CPU 0 implements re-invocation processing (step S2503 or step 52504) . CPU 0, via the hypervisor, implements normal hypervisor processing (step S2505), and ends the processing. On the other hand, if CPU 0, via hypervisor 0, judges that an in-operation indicator signal has been received from each CPU (step S2502: YES), CPU 0 transitions to step S2505.

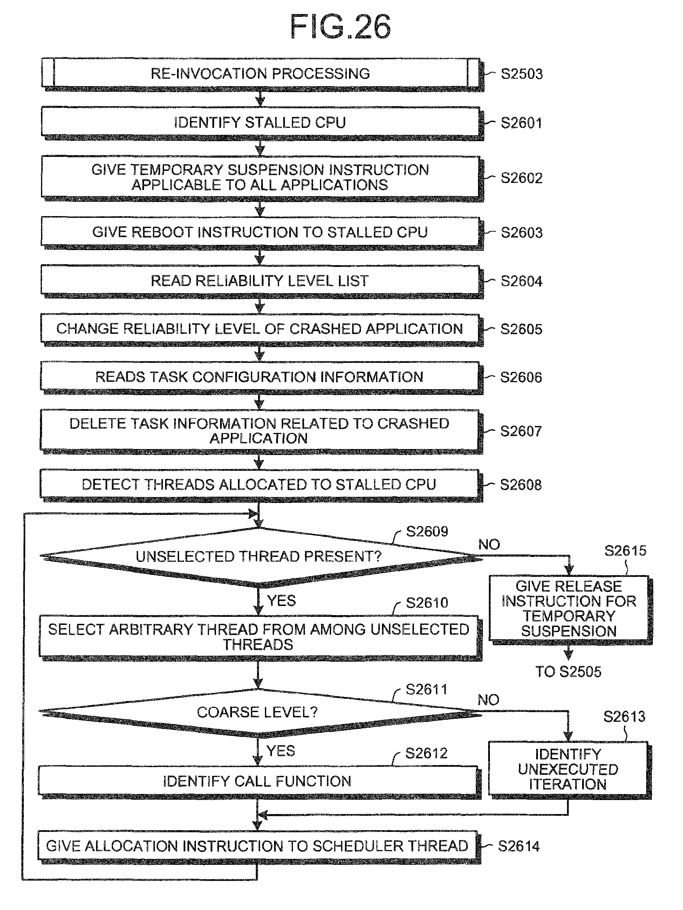

FIG. 26 is a flowchart depicting details of the re-invocation processing (step S2503) depicted in FIG. 25. CPU 0 identifies a stalled CPU (step S2601) and gives a temporary suspension instruction applicable to all applications (step 52602) . CPU 0 gives a reboot instruction to the stalled CPU (step S2603), and reads the reliability level list (step S2604).

CPU 0 changes the reliability level of the crashed application (step S2605), and reads the task configuration information (step S2606). CPU 0 deletes from the task configuration information, task information related to the crashed application (step S2607) .

From the task configuration information, CPU 0 detects the threads allocated to the stalled CPU (step S2608), and judges whether an unselected thread is present (step S2609) .

If an unselected thread is judged to be present (step S2609: YES), CPU 0 selects an arbitrary thread from among the unselected threads (step S2610), and judges whether the thread is a coarse level (step S2611) . If the thread is judged to be a coarse level (step S2611: YES), CPU 0 identifies the call function (step S2612) .

On the other hand, if the thread is not a coarse level (step S2611: NO), CPU 0 identifies an unexecuted iteration (step S2613) .

After any one among step S2612 and step S2613, CPU 0 associates the information identified at any one among step S2612 and step S2613 and gives the thread allocation instruction to the scheduler, (step S2614), and returns to step S2609.

If no unselected thread is present (step S2609: NO), CPU 0 gives a release instruction for the temporary suspension (step S2615), and transitions to step S2505.

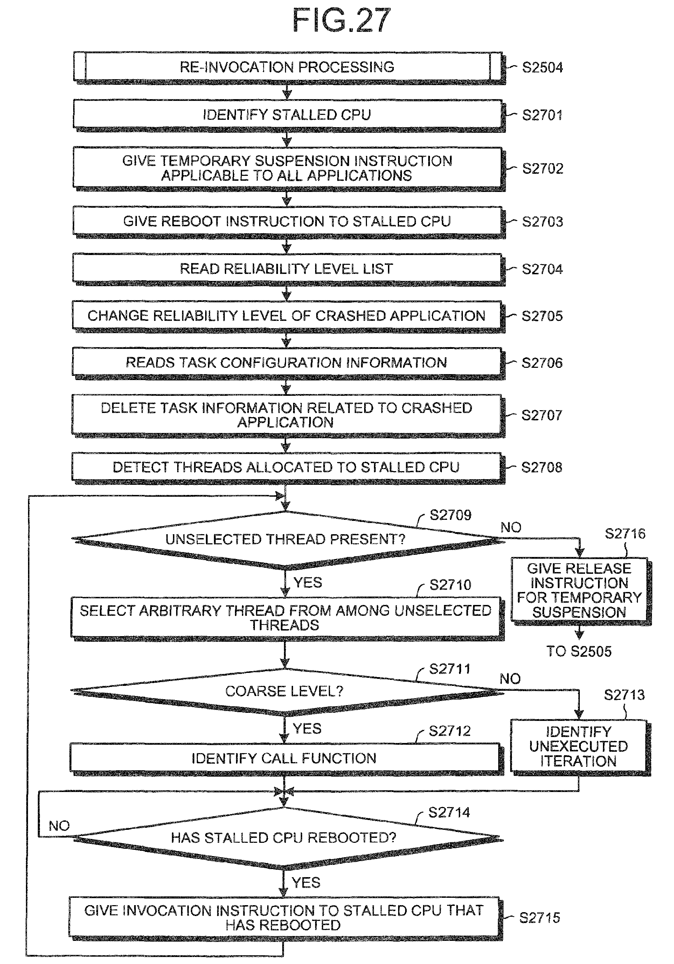

FIG. 27 is a flowchart depicting details of the re-invocation processing (step S2504) depicted in FIG. 25. The processing at steps S2701 to S2713 depicted in FIG. 27 is identical to the processing at steps S2601 to S2613 depicted in FIG. 26, and the processing at step S2716 is identical to the processing at step S2615. Therefore, description of processing identical to that depicted in FIG. 26 will be omitted herein. Accordingly, here, steps S2714 and S2715 will be described.

After any one of step S2712 and step S2713, CPU 0 judges whether the stalled CPU has rebooted (step 52714).
If the stalled CPU has not rebooted (step S2714: NO), CPU 0 returns to step S2714.

If the stalled CPU has rebooted (step S2714: YES), CPU 0 associates the information identified at any one among step S2712 and step S2713 and gives an invocation instruction to the stalled CPU that has rebooted (step S271) .

### (Processing for sending in-operation indicator signal by multi-core processor)

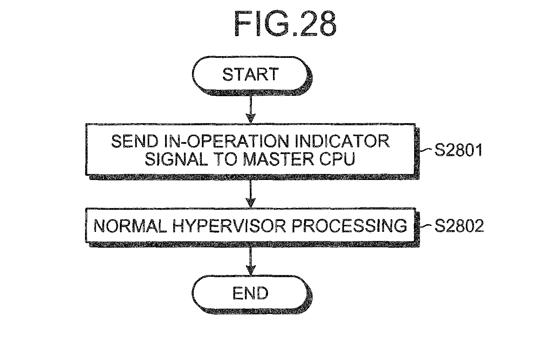

FIG. 28 is a flowchart depicting an example of processing for sending an in-operation indicator signal by the multi-core processor. Among the slave CPUs, CPUs that are not stalled, via respective hypervisors, send an in-operation indicator signal to the master CPU (step S2801), and implement normal hypervisor processing (step 52802). If a slave CPU is stalled, since the processing described with reference to FIG. 28 cannot be implemented, an in-operation indicator signal is not sent to the master CPU by the stalled slave CPU, enabling the master CPU to detect the stalled slave CPU.

Further, the master CPU, as depicted in the first embodiment, implements allocation scheduling of a high-reliability master thread to the master CPU, whereby hypervisor processing can be performed normally, without the master CPU stalling.

As described, the multi-core processor system, the control program, and the control method perform control such that a thread of an application of high reliability and a thread of an application not of high reliability are not allocated to the same CPU. Consequently, a thread of an application of high reliability can be prevented from crashing consequent to the crashing of a thread of an application not of high reliability.

Further, control is performed such that a thread of an application not of high reliability is not allocated to a CPU that has been allocated the master thread of an application of high reliability. Consequently, even if the thread of the application not of high reliability crashes, only a slave thread of the application of high reliability has a potential of crashing, and the master thread of the application of high reliability can be prevented from crashing. Thus, only the crashed slave thread has to be re-invoked, making recovery easy.

Further, control is performed such that the master thread of an application of high reliability is not allocated to a CPU that has been allocated a thread of an application not of high reliability. A slave thread of the application of high reliability is allocated to an arbitrary CPU in the multi-core processor.

Among threads of an application of high reliability, the master thread at least is protected from crashing consequent to an application not of high reliability, whereby the trouble of re-invoking all of the threads of the application of high reliability can be prevented.

Further, control is performed such that not all CPUs in the multi-core processor are allocated a master thread of an application of high reliability. Consequently, even when only an application of high reliability is run, a thread of an application not of high reliability can be allocated to the CPU.

Control is performed such that not all of the CPUs in the multi-core processor are allocated a master thread of an application not of high reliability. Consequently, when only an application not of high reliability is run, even in this case, the thread of an application of high reliability can be allocated to the CPU.

Further, since the master core is not allocated threads of an application not of high reliability, the master core, which executes scheduling processing, can be prevented from stalling.

As described, the multi-core processor system, the control program, and the control method control the scheduler such that a thread that has crashed consequent to a stalled CPU is re-invoked. Consequently, even with few memory resources, a thread that has crashed can be immediately re-invoked.

Further, a stalled CPU is rebooted and an invocation instruction for the thread that crashed is given to the stalled CPU after rebooting, whereby the crashed thread can be easily allocated to a core under low load, without scheduling by the scheduler.

### EXPLANATIONS OF LETTERS OR NUMERALS

500, 1600 multi-core processor system
100 scheduler
502 extracting unit
503 reliability level judging unit
504 identifying unit
505 detecting unit
506 allocation judging unit
507 determining unit
508 notifying unit
1602 detecting unit
1605 identifying unit
1608 allocation notifying unit
1606 reboot notifying unit

## Claims

1. A multi-core processor system comprising a multi-core processor and a storage apparatus storing for each application software (hereinafter, "application"), a reliability level related to operation, wherein
a given core in the multi-core processor has access to the storage apparatus and comprises:
an extracting unit that extracts from the storage apparatus, the reliability level for a given application that is among the applications and invokes a given thread,
a reliability level judging unit that judges based on the extracted reliability level and a specified threshold, whether the given application is an application of high reliability,
an identifying unit that identifies, in the multi-core processor, a core that has not been allocated a thread of an application of low reliability, when the given application is judged to be an application of high reliability, and identifies in the multi-core processor, a core that has not been allocated a thread of an application of high reliability, when the given application is judged to be an application of low reliability, and
a notifying unit that gives to the identified core, an invocation instruction for the given thread.

2. The multi-core processor system according to claim 1, wherein
the identify unit identifies, in the multi-core processor, a core that has not been allocated a master thread of an application of high reliability, when the given application is judged to be an application of low reliability, and
the notifying unit gives to the identified core, the invocation instruction for the given thread.

3. The multi-core processor system according to claim 2, wherein
the notifying unit gives to the identified core, the invocation instruction for the given thread, when the given application is judged to be an application of high reliability and the given thread is a master thread, and gives to an arbitrary core in the multi-core processor, the invocation instruction for the given thread, when the given application is judged to be an application of high reliability and the given thread is not a master thread.

4. The multi-core processor system according to claim 1, wherein
the given core further comprises:
a detecting unit that from among identified cores, detects a core that has not been allocated any threads,
an allocation judging unit that judges whether all cores in the multi-core processor have been allocated a thread of an application of low reliability, when the given thread has been allocated to the detected core, and
a determine unit that determines a core that is to be allocated the given thread, from among the identified cores excluding the detected core and when judging that all of the cores have been allocated a thread of an application of low reliability, and determines the core that is to be allocated the given thread, from among the identified cores and when judging that not all of the cores have been allocated a thread of an application of low reliability, wherein
the notifying unit gives to the determined core, the allocation instruction for the given thread.

5. The multi-core processor system according to claim 1, wherein
the given core further comprises:
a detecting unit that from among identified cores, detects a core that has not been allocated any threads,
an allocation judging unit that judge whether all cores in the multi-core processor have been allocated a thread of an application of high reliability, when the given thread has been allocated to the detected core, and
a determining unit that determines a core that is to be allocated the given thread, from among the identified cores excluding the detected core and when judging that all of the cores have been allocated a thread of an application of high reliability and determines the core that is to be allocated the given thread, from among the identified cores and when judging that not all of the cores have been allocated a thread of an application of high reliability, wherein
the notifying unit gives to the determined core, the allocation instruction for the given thread.

6. The multi-core processor system according to claim 1 to 4, wherein
the identifying unit identifies, in the multi-core processor and excluding the given core, a core that has not been allocated a thread of an application of high reliability, when the given application is judged to be an application of low reliability, and
the notifying unit gives to the identified core, the invocation instruction for the given thread.

7. A multi-core processor system comprising a multi-core processor, wherein a given core in the multi-core processor, via a scheduler and upon receiving notification of an allocation instruction for a thread, executes allocation processing for the thread, wherein
the given core comprises:
a detecting unit that detects, in the multi-core processor, a core that has stalled,
an identifying unit that identifies a thread that has crashed consequent to stalling of the detected core, and
a notifying unit that gives to the scheduler, an allocation instruction that instructs allocation of the identified thread to cores in the multi-core processor, excluding the stalled core.

8. The multi-core processor system according to claim 7, wherein
the given core further comprises
a reboot notifying unit that gives a reboot instruction to the detected stalled core, and
the notifying unit gives to the stalled core that has been rebooted by the reboot instruction, an invocation instruction for the identified thread, without giving the allocation instruction to the scheduler.

9. A control program that causes a given core in a multi-core processor and having access to a storage apparatus storing for each application software (hereinafter, "applications"), a reliability level related to operation, to execute:
extracting from the storage apparatus, the reliability level for a given application that invokes a given thread;
judging based on the extracted reliability level and a specified threshold, whether the given application is an application of high reliability;
identifying in the multi-core processor, a core that has not been allocated a thread of an application of low reliability, when judging that the given application is an application of high reliability, and identifying in the multi-core processor, a core that has not been allocated a thread of an application of high reliability, when judging that the given application is an application of low reliability; and
giving to the identified core, an invocation instruction for the given thread.

10. A control program that causes a given core that is in a multi-core processor and that upon receiving notification of an allocation instruction for a thread and via a scheduler, executes processing of allocating the thread to the multi-core processor, to execute:
detecting in the multi-core processor, a core that has stalled;
identifying a thread that has crashed consequent to stalling of the detected core;
giving to the scheduler, an allocation instruction that instructs allocation of the identified thread to cores in the multi-core processor exclusive of the stalled core.

11. A control method executed by a given core in a multi-core processor and having access to a storage device storing for each application software (hereinafter, "application,"), a reliability level related to operation, the control method comprising:
extracting and from the storage apparatus, the reliability level of a given application among the applications and invoking a given thread;
judging and based on the extracted reliability level and a specified threshold, whether the given application is an application of high reliability;
identifying and in the multi-core processor, a core that has not been allocated a thread of an application of low reliability, when judging that the given application is an application of high reliability, and identifying in the multi-core processor, a core that has not been allocated a thread of an application of high reliability, when judging that the given application is an application of low reliability; and
giving to the identified core, an invocation instruction for the given thread.

12. A control method executed by a given core that is in a multi-core processor and that upon receiving notification of an allocation instruction for a thread and via a scheduler, executes processing of allocating the thread to the multi-core processor, the control method comprising:
detecting in the multi-core processor, a core that has stalled;
identifying a thread that has crashed consequent to stalling of the detected core;
giving to the scheduler, an allocation instruction that instructs allocation of the identified thread to cores in the multi-core processor exclusive of the stalled core.
